(19) Europäisches Patentamt
European Patent Office
Office européen des brevets

(11) **EP 4 611 462 A1**

(12) **EUROPEAN PATENT APPLICATION**
published in accordance with Art. 153(4) EPC

(43) Date of publication:
**03.09.2025  Bulletin 2025/36**

(21) Application number: **23884764.4**

(22) Date of filing: **27.10.2023**

(51) International Patent Classification (IPC):
**H04W 72/25** $^{(2023.01)}$

(52) Cooperative Patent Classification (CPC):
**H04L 5/00; H04W 72/0446; H04W 72/0453;
H04W 72/25; H04W 72/40**

(86) International application number:
**PCT/CN2023/127187**

(87) International publication number:
**WO 2024/093832 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022  CN 202211378643**

(71) Applicant: **Huawei Technologies Co., Ltd.
Shenzhen, Guangdong 518129 (CN)**

(72) Inventors:
• **QI, Hong
Shenzhen, Guangdong 518129 (CN)**
• **SU, Hongjia
Shenzhen, Guangdong 518129 (CN)**
• **YI, Feng
Shenzhen, Guangdong 518129 (CN)**
• **LU, Lei
80992 Duesseldorf (DE)**

(74) Representative: **Isarpatent
Patent- und Rechtsanwälte
Barth Hassa Peckmann & Partner mbB
Friedrichstraße 31
80801 München (DE)**

(54) **RESOURCE SELECTION METHOD AND APPARATUS**

(57)     Embodiments of this application disclose a resource selection method and apparatus. The method includes: A first terminal device receives first sidelink control information, where the first sidelink control information is used to determine a first resource set from a first resource pool, and determines a second resource set from the first resource set based on a received signal strength indicator RSSI of at least one resource in the first resource set; receives second sidelink control information, where the second sidelink control information is used to determine a third resource set from a second resource pool; and determines a first candidate resource set, where when a ratio of a quantity of resources in an intersection set of the second resource set and the third resource set to a quantity of resources in the resource pool is less than a first threshold, the first candidate resource set includes the intersection set, and at least one resource in a difference set of the first resource set relative to the intersection set. According to embodiments of this application, resource insufficiency in a resource selection procedure can be resolved.

FIG. 8

**Description**

<u>TECHNICAL FIELD</u>

This application relates to the field of communication technologies, and in particular, to a resource selection method and apparatus.

<u>BACKGROUND</u>

With development of wireless communication technologies, people have increasing requirements on a high data rate and user experience, and have increasing requirements on a proximity service for knowing and communicating with people or things around. Therefore, a device-to-device (Device-to-Device, D2D) technology emerges. In a network using a long term evolution (Long Term Evolution, LTE) technology proposed by the 3rd generation partnership project (The 3rd Generation Partnership Project, 3GPP), an internet-of-vehicles technology for vehicle-to-everything (Vehicle-To-Everything, V2X) communication is proposed. The V2X communication is targeted at high-speed devices represented by vehicles, and is a basic technology and a key technology for future scenarios that have a quite high communication latency requirement, for example, intelligent vehicles, autonomous driving, and intelligent transportation systems. LTE-V2X communication can support communication scenarios with network coverage and communication scenarios without network coverage. LTE-V2X meets some basic requirements in V2X scenarios. However, existing LTE-V2X cannot effectively support future application scenarios such as fully intelligent driving and autonomous driving. With development of a 5G new radio (new radio, NR) technology in the 3GPP standard organization, 5G NR-V2X is further developed, for example, can support a lower transmission latency, more reliable communication transmission, a higher throughput, and better user experience, so as to meet requirements for wider application scenarios.

Generally, vehicles have a service life of more than 10 years. Therefore, NR-V2X and LTE-V2X inevitably coexist during commercial use. Coexistence means that LTE-V2X and NR-V2X can simultaneously operate with minimal interference. The coexistence does not require complete compatibility between functions of LTE-V2X and NR-V2X, but only requires that LTE-V2X and NR-V2X minimize impact on each other. When communication requirements in different radio access technologies coexist, how to avoid a resource conflict between V2X apparatuses using the different radio access technologies becomes an urgent problem to be resolved.

In addition, sidelink resource selection procedures in the different radio access technologies may be different. In the sidelink resource selection procedures in which the different radio access technologies are considered, how to resolve candidate resource insufficiency is a problem that needs to be discussed.

<u>SUMMARY</u>

Embodiments of this application provide a resource selection method and apparatus, to resolve a resource conflict between V2X apparatuses using different radio access technologies, or resolve candidate resource insufficiency in sidelink resource selection procedures in which different radio access technologies are considered.

According to a first aspect, a resource selection apparatus is provided. The resource selection apparatus may be a terminal device, a chip, a readable storage medium, or a component or an apparatus that may be used in the terminal device. The resource selection apparatus includes a first communication module and a second communication module. The first communication module includes a first physical layer and a first medium access control layer, and the second communication module includes a second physical layer and a second medium access control layer. The first communication module is used for communication using a first radio access technology, and the second communication module is at least used for communication using a second radio access technology, where the first radio access technology is different from the second radio access technology. There is a first interface between the first physical layer and the second medium access control layer, and the first interface is for information exchange between the first physical layer and the second media access layer.

The resource selection apparatus provided in this embodiment of this application includes both a communication module for communication using the first radio access technology and a module for communication using the second radio access technology. Therefore, a requirement for coexistence of different radio access technologies can be supported, to avoid a resource conflict. In addition, the first interface exists between the first physical layer and the second medium access control layer in this embodiment of this application, so that information exchange can be directly performed between the first physical layer and the second wireless medium access control layer, and higher layers and physical layers in different radio access technologies can directly communicate with each other. This avoids a waste of resources caused by unnecessary information forwarding.

In a possible implementation, the first radio access technology is an evolved universal terrestrial radio access E-UTRA technology, and the second radio access technology is a new radio NR technology.

In a possible implementation, the first physical layer is used to report a first resource set to the second medium access control layer, and the second physical layer is used to report a second resource set to the second medium access control layer, where the first resource set and the second resource set are used to determine a resource for physical sidelink shared channel PSSCH transmission and/or a resource for physical sidelink control channel PSCCH transmission.

In a possible implementation, the second medium access control layer is used to determine, from an intersection set of the first resource set and the second resource set, the resource for the PSSCH transmission and/or the resource for the PSCCH transmission.

In this embodiment of this application, the first physical layer is used to perform a resource selection procedure in sidelink communication using the first radio access technology, to determine the first resource set, and the second physical layer is used to perform a resource selection procedure in sidelink communication using the second radio access technology, to determine the second resource set. The first physical layer reports the first resource set to the second medium access control layer, and the second physical layer reports the second resource set to the second medium access control layer. The second medium access control layer may determine, based on the first resource set and the second resource set, the resource for the PSSCH transmission or the resource for the PSCCH transmission. In addition, because the first physical layer may directly report the first resource set to the second medium access control layer, a case in which the second medium access control layer forwards a resource selection requirement through the first medium access control layer is avoided, so that repeated sending of information is avoided and resources are saved.

In a possible implementation, the second medium access control layer is used to request the first physical layer to determine the first resource set, and the second medium access control layer is used to request the second physical layer to determine the second resource set.

In a possible implementation, the second medium access control layer is used to determine a first candidate resource set, where when a quantity of resources in the intersection set of the first resource set and the second resource set is less than a first threshold, the first candidate resource set includes the intersection set, and includes at least one resource in a difference set of the first resource set relative to the intersection set. The determining a first candidate resource set includes: selecting a resource from the difference set of the first resource set relative to the intersection set to the intersection set, to obtain the first candidate resource set. The first threshold may be configured by the resource pool, pre-configured, indicated by a network device by using signaling, or specified in a protocol.

In a possible implementation, the second medium access control layer is used to randomly select a resource from the difference set of the first resource set relative to the intersection set to the intersection set.

In this embodiment of this application, when a ratio of the quantity of resources in the intersection set of the first resource set and the second resource set to a quantity of resources in the resource pool is less than the first threshold, the second medium access control layer may select a resource from the first resource set and add the resource to the intersection set, to cause a quantity of resources in the intersection set to meet a threshold requirement, so that the first candidate resource set is obtained, and sufficient candidate resources are provided for subsequent selection of a time-frequency resource to send data, to resolve resource insufficiency in the resource selection procedures in which communication requirements of the different radio access technologies are considered.

In a possible implementation, the second medium access control layer is used to select a resource from the first resource set to the intersection set, until a ratio of a quantity of resources in the first candidate resource set to the quantity of resources in the resource pool is a second threshold, where the second threshold is less than or equal to the first threshold. The second threshold may be configured by the resource pool, pre-configured, indicated by the network device by using signaling, or specified in a protocol.

In this embodiment of this application, during resource addition, a resource in the first candidate resource set may not need to be added to an extent that the first threshold is met. A resource is selected from the first resource set and added to the intersection set until the ratio of the quantity of resources in the first candidate resource set to the quantity in the resource pool reaches or exceeds the second threshold.

According to a second aspect, a resource selection method is provided. The resource selection method is performed by a resource selection apparatus. The resource selection apparatus may be a terminal device, a chip, a readable storage medium, or a component or an apparatus that may be used in the terminal device. The resource selection apparatus includes a first communication module and a second communication module. The first communication module includes a first physical layer and a first medium access control layer, and the second communication module includes a second physical layer and a second medium access control layer.

The first communication module used is for communication using a first radio access technology, and the second communication module is at least used for communication using a second radio access technology, where the first radio access technology is different from the second radio access technology. The resource selection method includes:

The first physical layer reports a first resource set to the second medium access control layer, and the second physical layer reports a second resource set to the second medium access control layer.

The second medium access control layer determines, based on the first resource set and the second resource set, a resource for physical sidelink shared channel PSSCH transmission and/or a resource for physical sidelink control channel PSCCH transmission.

According to the resource selection method provided in this embodiment of this application, information exchange can be directly performed between the first physical layer and the second wireless medium access control layer, and higher layers and physical layers in different radio access technologies can directly communicate with each other. This avoids a waste of resources caused by unnecessary information forwarding, and can support a requirement for coexistence of the different radio access technologies.

In a possible implementation, the first radio access technology is an evolved universal terrestrial radio access E-UTRA technology, and the second radio access technology is a new radio NR technology.

In a possible implementation, the first physical layer reports the first resource set to the second medium access control layer, and the second physical layer reports the second resource set to the second medium access control layer, where the first resource set and the second resource set are used to determine the resource for physical sidelink shared channel PSSCH transmission and/or the resource for physical sidelink control channel PSCCH transmission.

In a possible implementation, the second medium access control layer determines, from an intersection set of the first resource set and the second resource set, the resource for the PSSCH transmission and/or the resource for the PSCCH transmission.

In this embodiment of this application, the first physical layer performs a resource selection procedure in sidelink communication using the first radio access technology, to determine the first resource set, and the second physical layer performs a resource selection procedure in sidelink communication using the second radio access technology, to determine the second resource set. The first physical layer reports the first resource set to the second medium access control layer, and the second physical layer reports the second resource set to the second medium access control layer. The second medium access control layer may determine, based on the first resource set and the second resource set, the resource for the PSSCH transmission or the resource for the PSCCH transmission. In addition, because the first physical layer may directly report the first resource set to the second medium access control layer, a case in which the second medium access control layer forwards a resource selection requirement through the first medium access control layer is avoided, so that repeated sending of information is avoided and resources are saved.

In a possible implementation, the second medium access control layer requests the first physical layer to determine the first resource set, and the second medium access control layer requests the second physical layer to determine the second resource set.

In a possible implementation, the second medium access control layer determines a first candidate resource set, where when a quantity of resources in the intersection set of the first resource set and the second resource set is less than a first threshold, the first candidate resource set includes the intersection set, and includes at least one resource in a difference set of the first resource set relative to the intersection set. The determining a first candidate resource set includes: selecting a resource from the difference set of the first resource set relative to the intersection set to the intersection set. The first threshold may be configured by a resource pool, pre-configured, indicated by a network device by using signaling, or specified in a protocol.

In a possible implementation, the second medium access control layer randomly selects a resource from the first resource set to the intersection set, to obtain the first candidate resource set.

In this embodiment of this application, when a ratio of the quantity of resources in the intersection set of the first resource set and the second resource set to a quantity of resources in the resource pool is less than the first threshold, the second medium access control layer may select a resource from the first resource set and add the resource to the intersection set, to obtain the first candidate resource set, so that a quantity of resources in the first candidate resource set meets a threshold requirement, and sufficient candidate resources are provided for subsequent selection of a time-frequency resource to send data, to resolve resource insufficiency in the resource selection procedures in which communication requirements of the different radio access technologies are considered.

In a possible implementation, the second medium access control layer selects a resource from the first resource set to the intersection set, until a ratio of a quantity of resources in the first candidate resource set to the quantity of resources in the second resource pool is a second threshold, where the second threshold is less than or equal to the first threshold. The second threshold may be configured by the resource pool, pre-configured, indicated by the network device by using signaling, or specified in a protocol.

In this embodiment of this application, during resource addition, a resource in the intersection set may not need to be added to an extent that the first threshold is met. A resource is selected from the first resource set and added to the intersection set until the ratio of the quantity of resources in the intersection set to the quantity in the resource pool reaches or exceeds the second threshold.

According to a third aspect, an embodiment of this application provides a resource selection method. The resource selection method may be performed by a terminal device, a chip, a readable storage medium, or a component or an apparatus that may be used in the terminal device. The method includes:

receiving first sidelink control information, where the first sidelink control information is used to determine a first resource set from a resource pool; and determining a second resource set from the first resource set based on a received signal strength indicator RSSI of each resource in the first resource set;

receiving second sidelink control information, where the second sidelink control information is used to determine a third resource set from a resource pool;

determining a first candidate resource set, where when a ratio of a quantity of resources in an intersection set of the second resource set and the third resource set to a quantity of resources in the resource pool is less than a first threshold, the first candidate resource set includes the intersection set, and the first candidate resource set further includes at least one resource in a difference set of the first resource set relative to the intersection set; and

selecting a time-frequency resource from the first candidate resource set, where the time-frequency resource is used for physical sidelink control channel PSCCH transmission and/or physical sidelink shared channel PSSCH transmission, where

a resource in the first resource pool and a resource in the second resource pool at least partially overlap.

In a possible implementation, the first sidelink control information is information in an evolved universal terrestrial radio access E-UTRA technology, and the second sidelink control information is information in a new radio NR technology.

In this embodiment of this application, when the ratio of the quantity of resources in the intersection set of the second resource set and the third resource set to the quantity of resources in the second resource pool is less than the first threshold, the terminal device may select a resource from the first resource set and add the resource to the intersection set, to obtain the first candidate resource set, so that a quantity of resources in the first candidate resource set meets a threshold requirement, and sufficient candidate resources are provided for subsequent selection of a time-frequency resource to send data, to resolve resource insufficiency in a resource selection procedure.

In a possible implementation, the determining a second resource set based on the first resource set and a received signal strength indicator RSSI of at least one resource in the first resource set includes:

moving a resource with a smallest RSSI in the first resource set to the second resource set, until a ratio of a quantity of resources in the second resource set to a quantity of resources in the first resource pool is greater than or equal to a second threshold.

In a possible implementation,

the determining a first candidate resource set includes:

the first candidate resource set includes the intersection set, and includes at least one resource in a difference set of an intersection set of the first resource set and the third resource set relative to the second resource set.

In this embodiment of this application, the intersection set of the first resource set and the third resource set is a resource that can avoid interference to another device. Therefore, a resource is selected from the difference set of the intersection set of the first resource set and the third resource set relative to the second resource set, to obtain the first candidate resource set. This can resolve resource insufficiency, and avoid interference to another terminal device.

In a possible implementation, the first candidate resource set includes the intersection set, and includes one or more resources with smallest RSSIs in the difference set of the intersection set of the first resource set and the third resource set relative to the second resource set. In a possible implementation,

the determining a first candidate resource set includes:

the first candidate resource set includes the intersection set, and includes at least one resource in a difference set of the second resource set relative to the intersection set.

In a possible implementation,

the determining a first candidate resource set includes:

the first candidate resource set includes the intersection set, and includes one or more resources with smallest RSSIs in the difference set of the second resource set relative to the intersection set.

In a possible implementation, that the first sidelink control information is used to determine the first resource set includes:

excluding a first time-frequency resource from the first resource pool when a reference signal received power RSRP of the first time-frequency resource is greater than a first RSRP threshold, where the first sidelink control information indicates a first priority and the first time-frequency resource, and the first priority is used to determine the first RSRP threshold.

In a possible implementation, the first time-frequency resource is excluded from the resource pool, and a resource that is not sensed is excluded from the first resource pool, to obtain the first resource set.

In a possible implementation, that the second sidelink control information is used to determine the second resource set includes:

excluding a second time-frequency resource from the second resource pool when an RSRP of the second time-frequency resource is greater than a second RSRP threshold, where the second sidelink control information indicates a second priority and the second time-frequency resource, and the second priority is used to determine the second reference signal received power RSRP threshold.

In a possible implementation, the second time-frequency resource is excluded from the second resource pool, and a resource that is not sensed is excluded from the resource pool, to obtain the third resource set.

In a possible implementation, the resource selection method further includes: increasing the first RSRP threshold, and redetermining the first resource set based on an increased first RSRP threshold to obtain a fourth resource set, where the first candidate resource set further includes a resource in a difference set of the fourth resource set relative to the first resource set. According to a fourth aspect, an embodiment of this application provides a resource selection apparatus. The resource selection apparatus may be a terminal device, a chip, a readable storage medium, or a component or an apparatus that may be used in the terminal device. The resource selection apparatus provided in this embodiment of this application may include modules or units configured to implement the method according to the third aspect. For example, the resource selection apparatus may include a transceiver module and a processing module, or may include a communication module and a processing module. The transceiver module and the communication module are configured to implement an information receiving and sending function, and the processing module is configured to implement a function other than information receiving and sending.

The resource selection apparatus provided in this embodiment of this application can implement one or more technical effects of the resource selection method according to the third aspect. Details are not described herein again.

According to a fifth aspect, an embodiment of this application provides a resource selection method. The resource selection method may be performed by a terminal device, a chip, a readable storage medium, or a component or an apparatus that may be used in the terminal device. The method includes:

receiving first sidelink control information, where the first sidelink control information indicates a first priority, and the first priority is used to determine a first reference signal received power RSRP threshold; and determining a first resource set from a first resource pool based on the first RSRP threshold;
determining a second resource set from the first resource set based on a received signal strength indicator RSSI of at least one resource in the first resource set;
receiving second sidelink control information, where the second sidelink control information indicates a second priority, and the second priority is used to determine a second reference signal received power RSRP threshold; and determining a third resource set from a second resource pool based on the second RSRP threshold; and
when a ratio of a quantity of resources in an intersection set of the second resource set and the third resource set to a quantity of resources in the resource pool is less than a first threshold, increasing the second RSRP threshold to obtain a third RSRP threshold, and redetermining the third resource set based on the third RSRP threshold to obtain a fifth resource set, where
the first sidelink control information is information in an evolved universal terrestrial radio access E-UTRA technology, and the second sidelink control information is information in a new radio NR technology.

In a possible implementation, the fifth resource set is used by the terminal device to select a time-frequency resource from an intersection set of the second resource set and the fifth resource set, and the time-frequency resource is used for PSCCH transmission and/or PSSCH transmission.

In this embodiment of this application, when the ratio of the quantity of resources in the intersection set of the second resource set and the third resource set to the quantity of resources in the second resource pool is less than the first threshold, the terminal device may increase the second RSRP threshold to obtain the third RSRP threshold, and redetermine the third resource set based on the third RSRP threshold to obtain the fifth resource set, and the terminal device may select a time-frequency resource from an intersection set of the fifth resource set and the second resource set to send information. It may be understood that, a quantity of resources in the fifth resource set is greater than or equal to a quantity of resources in the third resource set, and the third resource set is redetermined, so that interference to an LTE-V2X device can be avoided to the largest extent, and time-frequency resources that can be selected are added, thereby resolving selectable resource insufficiency when communication requirements in both LTE-V2X and NR-V2X are considered.

In a possible implementation, the determining a first resource set from a first resource pool based on the first RSRP threshold includes:

The first sidelink control information indicates a first time-frequency resource. When an RSRP value of the first time-frequency resource is greater than the first RSRP threshold, the first time-frequency resource is excluded from the first resource pool to obtain a first resource set, and a resource with a smallest RSSI in the first resource set is moved to the second resource set, until a ratio of a quantity of resources in the second resource set to a quantity of resources in the resource pool is greater than or equal to a second threshold.

In a possible implementation, the determining a first resource set from a first resource pool further includes: excluding a resource that is not sensed from the first resource pool.

In a possible implementation, the redetermining the third resource set based on the third RSRP threshold to obtain a fifth resource set includes:

when an RSRP value of a second time-frequency resource is greater than the third RSRP threshold, excluding the second time-frequency resource from the second resource pool to obtain the fifth resource set.

In a possible implementation, a quantity of resources in the intersection set of the fifth resource set and the second resource set is greater than a third threshold, where the third threshold is less than or equal to the first threshold.

In this embodiment of this application, the second RSRP threshold is increased, so that the third resource set is redetermined, to obtain the fifth resource set. The quantity of resources in the fifth resource set is greater than or equal to that in the third resource set. In this case, the quantity of resources in the intersection set of the fifth resource set and the second resource set may be greater than the quantity of resources in the intersection set of the third resource set and the second resource set. The quantity of resources in the intersection set of the fifth resource set and the second resource set may be increased by increasing the second RSRP threshold for one or more times, until a ratio of the quantity of resources in the intersection set of the fifth resource set and the second resource set to a quantity of resources in the resource pool is greater than the third threshold, where the third threshold is less than or equal to the first threshold, and the third threshold may be configured by the resource pool, pre-configured, indicated by a network device, or specified in a protocol.

In a possible implementation, the method further includes: selecting a resource from the intersection set of the fifth resource set and the second resource set, where the resource is used for physical sidelink control channel PSCCH transmission and/or physical sidelink shared channel PSSCH transmission.

In a possible implementation, the method further includes:
increasing the first RSRP threshold to obtain a fourth RSRP threshold, and redetermining the first resource set based on the fourth RSRP threshold to obtain a sixth resource set.

In a possible implementation, the increasing the first RSRP threshold to obtain a fourth RSRP threshold includes: when the ratio of the quantity of resources in the intersection set of the fifth resource set and the second resource set to the quantity of resources in the resource pool is still less than the third threshold or the first threshold, increasing the first RSRP threshold to obtain the fourth RSRP threshold, where the third threshold is less than or equal to the first threshold. The third threshold may be configured by the resource pool, pre-configured, indicated by a network device, or specified in a protocol.

In a possible implementation, the redetermining the first resource set based on the fourth RSRP threshold to obtain a sixth resource set includes:
when the RSRP value of the first time-frequency resource is greater than the fourth RSRP threshold, excluding the first time-frequency resource from the first resource pool to obtain the sixth resource set.

In this embodiment of this application, a resource may be added by increasing the first RSRP threshold. To be specific, the first RSRP threshold is increased to obtain the fourth RSRP threshold, and the sixth resource set is obtained by using the fourth RSRP threshold. The terminal device may select a time-frequency resource from an intersection set of the sixth resource set and the fifth resource set to send information.

According to a sixth aspect, an embodiment of this application provides a resource selection apparatus. The resource selection apparatus may be a terminal device, a chip, a readable storage medium, or a component or an apparatus that may be used in the terminal device. The resource selection apparatus provided in this embodiment of this application may include modules or units configured to implement the method according to the fifth aspect. For example, the resource selection apparatus may include a transceiver module and a processing module, or may include a communication module and a processing module. The transceiver module and the communication module are configured to implement an information receiving and sending function, and the processing module is configured to implement a function other than information receiving and sending.

The resource selection apparatus provided in this embodiment of this application can implement one or more technical effects of the resource selection method according to the fifth aspect. Details are not described herein again.

According to a seventh aspect, an embodiment of this application provides a resource selection method. The resource selection method may be performed by a terminal device, a chip, a readable storage medium, or a component or an apparatus that may be used in the terminal device. The method includes:

receiving first sidelink control information, where the first sidelink control information is used to determine a first resource set from a resource pool; and
receiving second sidelink control information, where the second sidelink control information is used to determine a third resource set from a resource pool, where
the first sidelink control information is information in an evolved universal terrestrial radio access E-UTRA technology, and the second sidelink control information is information in a new radio NR technology;
determining a first candidate resource set, where when a ratio of a quantity of resources in an intersection set of the first resource set and the third resource set to a quantity of resources in the resource pool is less than a first threshold, the first candidate resource set includes the intersection set, and the first candidate resource set further includes at least one resource in a difference set of the first resource set relative to the intersection set; and
selecting a time-frequency resource from the first candidate resource set, where the time-frequency resource is used for PSCCH transmission and/or PSSCH transmission, where

a resource in the first resource pool and a resource in the second resource pool at least partially overlap.

In a possible implementation, that the first sidelink control information is used to determine a first resource set from a resource pool includes:

excluding a first time-frequency resource from the resource pool when an RSRP measurement value of the first time-frequency resource is greater than a first RSRP threshold, where the first sidelink control information indicates the first time-frequency resource and a first priority, and the first priority is used to determine the first RSRP threshold.

In a possible implementation, that the second sidelink control information is used to determine a second resource set from a first resource pool includes:

excluding a second time-frequency resource from the second resource pool when an RSRP measurement value of the second time-frequency resource is greater than a second RSRP threshold, where the second sidelink control information indicates the second time-frequency resource and a second priority, and the second priority is used to determine the second RSRP threshold.

In a possible implementation, the determining a first candidate resource set includes: selecting a resource from the difference set of the first resource set relative to the intersection set to the intersection set, to obtain the first candidate resource set.

In a possible implementation, the selecting a resource from the difference set of the first resource set relative to the intersection set to the intersection set, to obtain the first candidate resource set includes: randomly selecting a resource from the first resource set to the intersection set, or selecting a resource with a smallest RSSI from the first resource set to the intersection set.

In a possible implementation, that a resource is selected from the first resource set to the intersection set includes:

randomly selecting a resource from the first resource set to the intersection set, or selecting a resource with a smallest RSSI from the first resource set to the intersection set.

According to an eighth aspect, an embodiment of this application provides a resource selection apparatus. The resource selection apparatus may be a terminal device, a chip, a readable storage medium, or a component or an apparatus that may be used in the terminal device. The resource selection apparatus provided in this embodiment of this application may include modules or units configured to implement the method according to the seventh aspect. For example, the resource selection apparatus may include a transceiver module and a processing module, or may include a communication module and a processing module. The transceiver module and the communication module are configured to implement an information receiving and sending function, and the processing module is configured to implement a function other than information receiving and sending.

The resource selection apparatus provided in this embodiment of this application can implement one or more technical effects of the resource selection method according to the seventh aspect. Details are not described herein again.

According to a ninth aspect, an embodiment of this application provides a resource selection method. The resource selection method may be performed by a terminal device, a chip, a readable storage medium, or a component or an apparatus that may be used in the terminal device. The method includes:

receiving first sidelink control information, where the first sidelink control information indicates a first priority and a first time-frequency resource, and the first priority is used to determine a first RSRP threshold; and
receiving second sidelink control information, where the second sidelink control information indicates a second priority and a second time-frequency resource, and the second priority is used to determine a second RSRP threshold; and determining a first candidate resource set from a resource pool based on the first RSRP threshold, the second RSRP threshold, an RSRP measurement value of the first time-frequency resource, and an RSRP measurement value of the second time-frequency resource, where a time-frequency resource is selected from the first candidate resource set, and the time-frequency resource is used for PSSCH transmission and/or PSCCH transmission.

The first sidelink control information is information in a universal terrestrial radio access E-UTRA technology, and the second sidelink control information is information in a new radio NR technology.

In a possible implementation, the determining a candidate resource set based on the first RSRP threshold, the second RSRP threshold, an RSRP measurement value of the first time-frequency resource, and an RSRP measurement value of the second time-frequency resource includes:

excluding the first time-frequency resource from the resource pool when the RSRP measurement value of the first time-frequency resource is greater than the first RSRP threshold.

In a possible implementation, the determining a first candidate resource set based on the first RSRP threshold, the second RSRP threshold, an RSRP measurement value of the first time-frequency resource, and an RSRP measurement value of the second time-frequency resource includes:

excluding the second time-frequency resource from the resource pool when the RSRP measurement value of the second time-frequency resource is greater than the second RSRP threshold.

In a possible implementation, when a ratio of a quantity of resources in the first candidate resource set to a quantity of resources in the resource pool is less than a first threshold, the first RSRP threshold and/or the second RSRP threshold are/is increased to redetermine the first candidate resource set, to obtain a second candidate resource set.

In a possible implementation, the method further includes: selecting a time-frequency resource from the second candidate resource set, where the time-frequency resource is used for PSSCH transmission and/or PSCCH transmission.

In a possible implementation, a ratio of a quantity of resources in the second candidate resource set to the quantity of resources in the resource pool is greater than or equal to a third threshold, where the third threshold is less than or equal to the first threshold.

According to a tenth aspect, an embodiment of this application provides a resource selection apparatus. The resource selection apparatus may be a terminal device, a chip, a readable storage medium, or a component or an apparatus that may be used in the terminal device. The resource selection apparatus provided in this embodiment of this application may include modules or units configured to implement the method according to the ninth aspect. For example, the resource selection apparatus may include a transceiver module and a processing module, or may include a communication module and a processing module. The transceiver module and the communication module are configured to implement an information receiving and sending function, and the processing module is configured to implement a function other than information receiving and sending.

The resource selection apparatus provided in this embodiment of this application can implement one or more technical effects of the resource selection method according to the ninth aspect. Details are not described herein again.

According to an eleventh aspect, this application further provides a chip system, including a processor, configured to perform the method in the possible implementations of the foregoing aspects.

According to a twelfth aspect, this application further provides a computer program product, including computer-executable instructions. When the instructions executed by a communication apparatus are run on a computer, the method in the possible implementations of the foregoing aspects is performed.

According to a thirteenth aspect, this application further provides a computer-readable storage medium. The computer-readable storage medium stores a computer program or instructions, and when the instructions are run on a communication apparatus, the method in the possible implementations of the foregoing aspects is performed.

## BRIEF DESCRIPTION OF DRAWINGS

FIG. 1 is a diagram of an architecture of a communication system to which an embodiment of this application is applicable;

FIG. 2 is a diagram of time division multiplexing of resources of an NR-V2X device and an LTE-V2X device according to an embodiment of this application;

FIG. 3(a) and FIG. 3(b) are a diagram of frequency division multiplexing of resources of an NR-V2X device and an LTE-V2X device according to an embodiment of this application;

FIG. 4(a) and FIG. 4(b) are a diagram of resource selection in a mode 2 according to an embodiment of this application;

FIG. 5 shows a communication system applicable to a resource indication method according to an embodiment of this application;

FIG. 6 is a diagram of a structure of an NR-V2X device according to an embodiment of this application;

FIG. 7(a) and FIG. 7(b) are a diagram of information exchange structures in resource selection processes of two NR-V2X devices according to an embodiment;

FIG. 8 is a flowchart of a resource selection method according to an embodiment of this application;

FIG. 9 is a flowchart of another resource selection method according to an embodiment of this application;

FIG. 10 is a flowchart of still another resource selection method according to an embodiment of this application;

FIG. 11 is a flowchart of yet another resource selection method according to an embodiment of this application;

FIG. 12 is a diagram of a resource selection method according to an embodiment of this application;

FIG. 13 is a diagram of a structure of a communication apparatus according to an embodiment of this application; and

FIG. 14 is a diagram of a structure of a communication apparatus according to an embodiment of this application.

## DESCRIPTION OF EMBODIMENTS

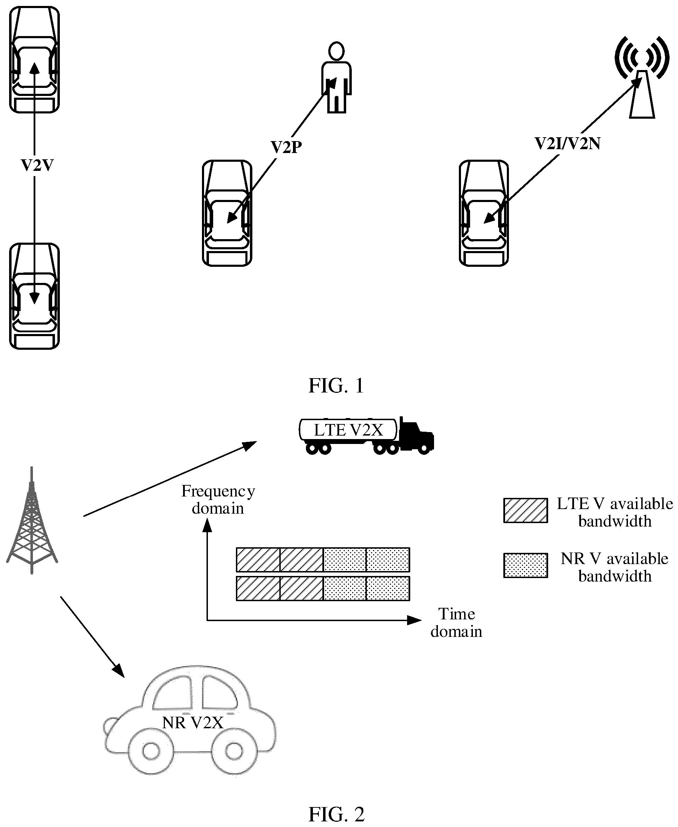

V2X communication is communication between a vehicle and anything outside the vehicle, including vehicle-to-vehicle (Vehicle-to-Vehicle, V2V) communication, vehicle-to-pedestrian (Vehicle-to-Pedestrian, V2P) communication, vehicle-to-infrastructure (Vehicle-to-Infrastructure, V2I) communication, and vehicle-to-network (Vehicle-to-Network, V2N) communication, as shown in FIG. 1.

The V2X communication is intended for high-speed devices represented by vehicles, and is a basic and key technology to be applied to scenarios in the future, for example, intelligent vehicles, autonomous driving, and intelligent transportation systems, with a quite high communication latency requirement. LTE-V2X communication may support a communication scenario with network coverage and a communication scenario without network coverage, and a resource allocation manner in the LTE-V2X communication may be a network access device scheduling mode, for example, an evolved universal terrestrial radio access network NodeB (E-UTRAN NodeB, eNB) scheduling mode, and a user equipment (User Equipment, UE) autonomous-selection mode. Based on a V2X technology, a vehicle user equipment (Vehicle UE, V-UE) can send some information, for example, information, such as a position, a speed, and an intention (turning, paralleling, or reversing), triggered by periodic events and information triggered by some aperiodic events, of the vehicle user equipment to surrounding V-UE. Similarly, the V-UE also receives information about a surrounding user in real time.

LTE-V2X meets some basic requirements in V2X scenarios. However, existing LTE-V2X cannot effectively support application scenarios such as fully intelligent driving and autonomous driving in the future. With development of a 5G NR technology in the 3GPP standards organization, 5G NR-V2X is further developed, for example, can support a lower transmission latency, more reliable communication transmission, a higher throughput, and better user experience, so that requirements for wider application scenarios are met.

A vehicle generally has a service life of more than 10 years. Therefore, NR-V2X and LTE-V2X inevitably coexist during commercial use. In addition, NR-V2X faces spectrum resource insufficiency, and exploration and sharing of spectrum resources with LTE-V2X also become a current research hotspot.

This application mainly relates to a solution of coexistence of NR-V2X and LTE-V2X when NR-V2X and LTE-V2X share a resource pool. Coexistence means that LTE-V2X and NR-V2X can simultaneously operate with minimal interference. The coexistence does not require complete compatibility between functions of LTE-V2X and NR-V2X, and only requires that LTE-V2X and NR-V2X minimize impact on each other. Specifically, based on whether channel sharing (resource pool sharing) (co-channel) is performed, solutions are classified into a channel sharing solution and a channel non-sharing solution. There are two channel non-sharing solutions: a time division multiplexing (Time Division Multiplexing, TDM) solution and a frequency division multiplexing (Frequency Division Multiplexing, FDM) solution. The time division multiplexing solution is a solution in which overlapping or simultaneous NR-V2X and LTE-V2X transmission is required to be avoided. The frequency division multiplexing solution is a solution in which NR-V2X transmission and LTE-V2X transmission are simultaneously performed, and a total power shared between the two is defined.

In the time division multiplexing solution, NR-V2X and LTE-V2X transmission are performed at different time through allocation. As shown in FIG. 2, transmission by an NR-V vehicle and transmission by an LTE-V vehicle are performed at different time through allocation. In this scenario, in both of the foregoing two radio transmission technologies (Radio Access Technologies, RATs), a maximum allowed transmission power may be used for transmission, but synchronization is required.

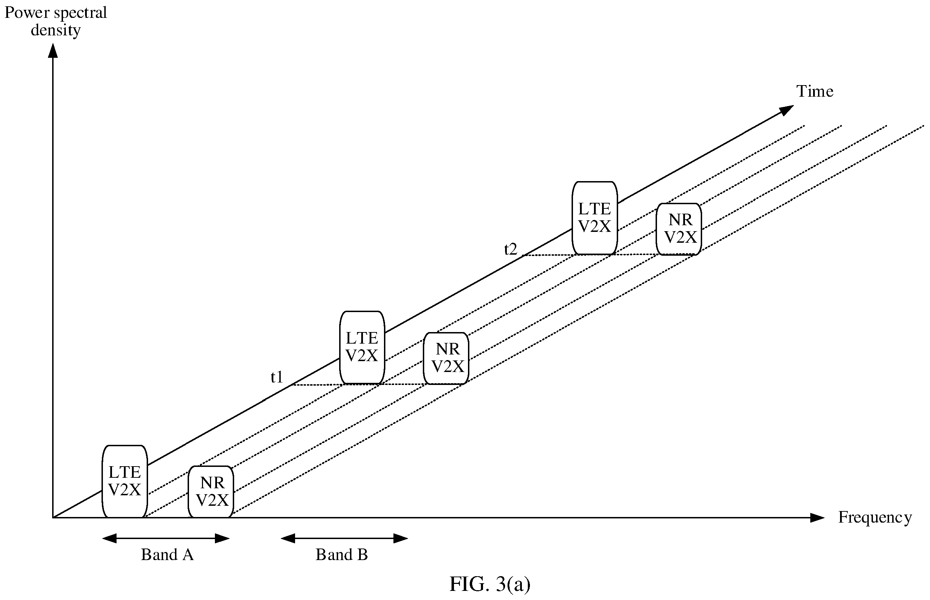

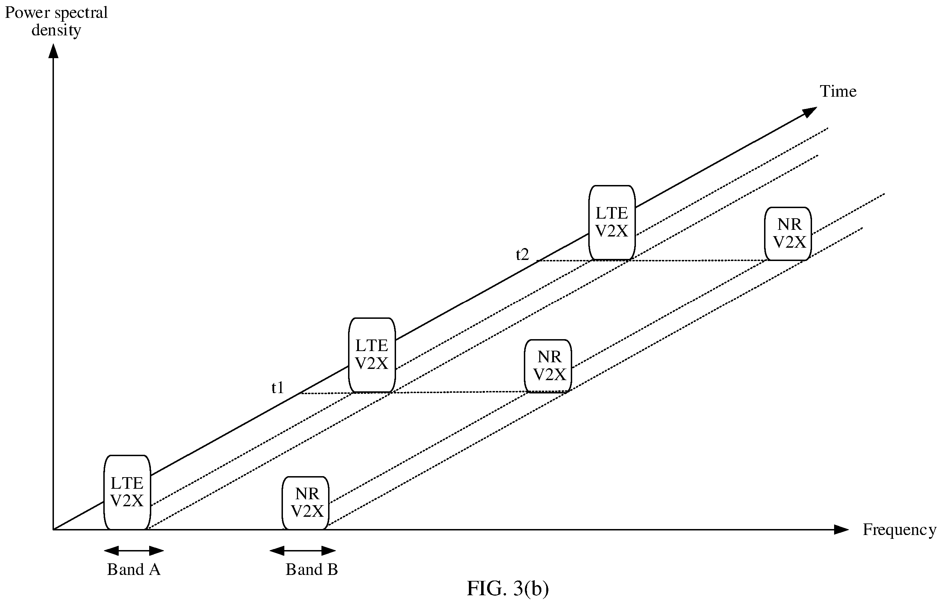

In the frequency division multiplexing solution, NR-V2X transmission and LTE-V2X transmission may be simultaneously performed, and strict synchronization processing is not required. In this scenario, power allocation needs to be considered, and the coexistence is classified into interband FDM coexistence and intraband FDM coexistence. For the two coexistence modes, when sidelinks (Sidelinks, SLs) in the two RATs accept overlapping, the coexistence is feasible. A specific solution is shown in FIG. 3(a) and FIG. 3(b). FIG. 3(a) shows intraband transmission. To be specific, LTE-V2X and NR-V2X share a same bandwidth, and frequency division transmission is performed on the bandwidth. FIG. 3(b) shows interband transmission. To be specific, LTE-V2X transmission and NR-V2X transmission are performed on different bandwidths.

In the time division multiplexing solution, a requirement of a scenario on a low latency may not be met. In addition, in this solution, strict time synchronization is required, which may affect delay, reliability, and data rate requirements of some V2X applications. In contrast, for the frequency division multiplexing solution, it is necessary to consider impact on a quality of service (Quality of Service, QoS) class caused by improper power allocation.

In NR-V2X, there are two transmission modes for sidelink-related resource allocation: a mode in which a base station allocates a resource (mode 1) and a mode in which a user autonomously selects a resource (mode 2). The mode in which a base station allocates a resource is mainly applied to V2X communication with network coverage. The base station centrally performs resource allocation based on a BSR reporting status of a UE. Resource allocation may be performed in a dynamic mode or a (pre-)configured mode. The resource allocated by the base station includes an initial resource and/or a retransmission resource.

In the dynamic mode, the base station notifies, by using DCI, a transmitter UE of a time-frequency resource used for sidelink data. After receiving the DCI, the transmitter UE sends the data. After performing decoding, a receiver UE feeds back sidelink-hybrid automatic repeat request (hybrid automatic repeat request, HARQ) information to the transmitter UE. Then, the transmitter UE forwards the SL-HARQ information to the base station.

Moment t1 is a moment at which the transmitter UE receives the DCI from the base station, and decodes the DCI.

Moment t2 is a moment at which the transmitter UE performs physical sidelink shared channel (physical sidelink shared channel, PSSCH) transmission and physical sidelink control channel (physical sidelink control channel, PSCCH) transmission with the receiver UE.

Moment t3 is a moment at which the receiver UE feeds back the sidelink-HARQ information to the transmitter UE.

Moment t4 is a moment at which the transmitter UE feeds back the sidelink-HARQ information to the base station.

In the (pre-)configured mode, the base station configures a related sidelink sending time-frequency resource by using higher layer signaling, and a transmitter UE directly sends sidelink data (type-1) on the configured resource, or the base station sends a DCI message to activate the transmitter UE to perform sidelink data transmission (type-2). After receiving the sidelink data from the transmitter UE, a receiver UE decodes the sidelink data, and then feeds back sidelink-HARQ information to the transmitter UE. Then, the transmitter UE forwards the SL-HARQ information to the base station.

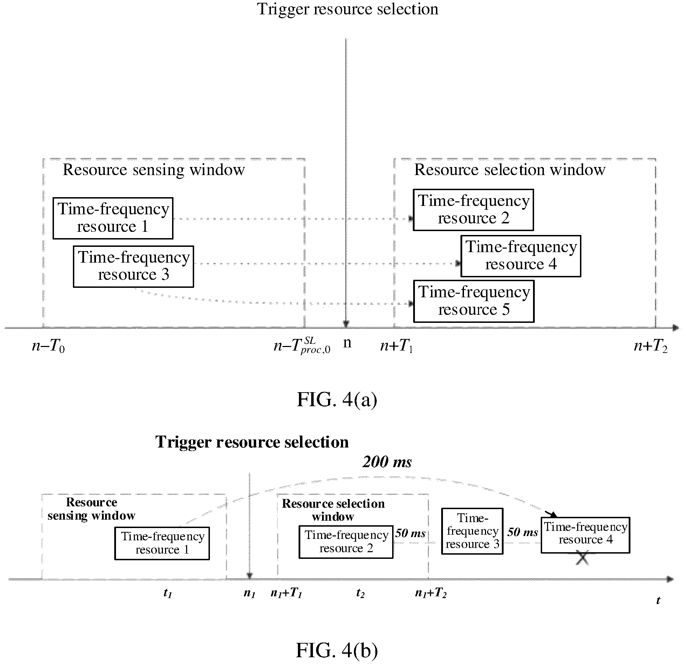

In the mode in which the user autonomously selects a resource, namely, the mode 2 (Mode 2), a transmitter UE autonomously selects a transmission resource in a resource selection window based on a resource sensing result of the transmitter UE, to perform communication. FIG. 4(a) and FIG. 4(b) are a diagram of resource selection in a mode 2 according to an embodiment of this application. It is assumed that a transmitter UE triggers resource selection in a slot n. Specific steps are as follows.

Step 1: Determine a resource selection window (resource selection window, RSW), where a time range of the resource selection window in time domain is $[n + T_1, n + T_2]$, and $T_1$ and $T_2$ respectively satisfy that $0 \leq T_1 \leq T_{proc,1}^{SL}$, and $T_{2min} \leq T_2 \leq PDB$. A PDB is a packet delay budget (packet delay budget, PDB). $T_{proc,1}^{SL}$ represents a delay of processing resource selection and data sending by the terminal device. There is a one-to-one correspondence between a value of $T_{proc,1}^{SL}$ and a subcarrier spacing $\mu_{SL}$ that is used for transmission, as shown in Table 1. The value of $T_{proc,1}^{SL}$ includes a processing delay of determining the resource selection window by the terminal device.

| Table 1: Relationship between $T_{proc,1}^{SL}$ and the subcarrier spacing $\mu_{SL}$ | |
|:---:|:---:|
| $\mu_{SL}$ | $T_{proc,1}^{SL}$ [slots] |
| 0 | 3 |
| 1 | 5 |
| 2 | 9 |
| 3 | 17 |

Step 2: Determine a resource sensing window $[n - T_0, n - T_{proc,0}^{SL})$, where $T_{proc,0}^{SL}$ represents a delay of processing a sensing result by the terminal device. There is a one-to-one correspondence between a value of $T_{proc,0}^{SL}$ and the subcarrier spacing $\mu_{SL}$ that is used for transmission. The value of $T_{proc,0}^{SL}$ includes a processing delay of determining a sensing result in the sensing window by the terminal device.

| Table 2: Relationship between $T_{proc,0}^{SL}$ and the subcarrier spacing $\mu_{SL}$ | |
|:---:|:---:|
| $\mu_{SL}$ | $T_{proc,1}^{SL}$ [slots] |
| 0 | 1 |
| 1 | 1 |
| 2 | 2 |
| 3 | 4 |

Step 3: Determine a reference signal received power (reference signal received power, RSRP) threshold, where the RSRP threshold is related to a priority $prio_{TX}$ of to-be-sent data and a priority $prio_{RX}$ indicated by received sidelink control information (sidelink control information, SCI), and is specifically an RSRP threshold corresponding to a ($prio_{RX}$ +

($prio_{TX}$- 1) ₊8)$^{th}$ index (index) in an RSRP threshold set configured by a resource pool.

Step 4: Initialize an available resource set $S_A$ to all time-frequency resources in the resource pool (where one time-frequency resource is one slot and L consecutive sub-channels in the slot).

Step 5: Exclude the following time-frequency resource from $S_A$ when all the following conditions are met:

The terminal device does not sense a slot in the sensing window, that is, the terminal device is in a sending state in the slot. Due to a limitation of half-duplex, when the terminal device is in the sending state in the slot, the terminal device cannot perform receiving in the slot. Consequently, the slot cannot be sensed.

Moreover, it is assumed that there is SCI sent by another terminal device in the slot, where the SCI indicates periodic resource reservation, and all sub-channels corresponding to the periodic resource reservation are in a slot in the selection window. A periodic resource reservation value used by the SCI includes periodic reservation values configured by all resource pools.

Refer to FIG. 4(a). For a time-frequency resource 1, if the terminal device is in the sending state on the time-frequency resource 1, the terminal device cannot perform receiving on the time-frequency resource 1, and consequently, cannot sense the time-frequency resource 1. It is assumed that there is SCI sent by another terminal device on the time-frequency resource 1, and the SCI indicates periodic resource reservation. In other words, the SCI indicates that a time-frequency resource 2 is a periodic reserved resource of the time-frequency resource 1, and the time-frequency resource 2 falls within the resource selection window. In this case, the time-frequency resource 2 is excluded from $S_A$.

Step 5a: If remaining time-frequency resources in $S_A$ after the exclusion are less than X% of total resources in the resource selection window, perform initialization in step 4 again, where re-initialized $S_A$ is consistent with previously initialized $S_A$, but resource exclusion in step 5 does not take effect.

Resources excluded in step 5 may also be collectively referred to as a time-frequency resource that is not sensed.

Step 6: Exclude the following time-frequency resource units from $S_A$ when all the following conditions are met:

received first-stage SCI is successfully decoded in a slot $t_m^{SL}$ ; and

RSRP measurement is performed based on the first-stage SCI, and a measurement value is greater than the RSRP threshold in step 3; where

the to-be-excluded time-frequency resource is a time-frequency resource that is reserved by using the first-stage SCI and that is in the resource selection window.

That RSRP measurement is performed based on the first-stage SCI includes:

if a higher-layer parameter *sl-RS-ForSensing* is set to 'pssch', performing measurement on a DMRS resource element of a PSSCH based on the received first-stage SCI, to obtain a PSSCH-RSRP; or

if a higher-layer parameter *sl-RS-ForSensing* is set to 'pscch', performing measurement on a DMRS resource element of a PSCCH based on the received first-stage SCI, to obtain a PSCCH-RSRP.

The time-frequency resource reserved by using the first-stage SCI includes: one or more consecutive time-frequency resources that are periodically reserved, and a reserved resource indicated based on a time resource indicator value (Time Resource indicator value, TRVI) and a frequency resource indicator value (Frequency Resource indicator value, FRVI).

As shown in FIG. 4(a), the terminal device receives first-stage SCI on a time-frequency resource 3, and successfully decodes the first-stage SCI. A time-frequency resource reserved by using the first-stage SCI includes a periodically reserved time-frequency resource 4 and a time-frequency resource 5 indicated based on the FRVI and the TRVI.

RSRP measurement values of the time-frequency resource 4 and the time-frequency resource 5 are predicted based on an RSRP value of the time-frequency resource 3, and an RSRP threshold is determined based on a priority indicated by the first-stage SCI. When the RSRP measurement values of the time-frequency resource 4 and the time-frequency resource 5 are greater than the RSRP threshold, the time-frequency resource 4 and the time-frequency resource 5 are excluded from the resource pool.

The time-frequency resource excluded in step 6 further includes:

a time-frequency resource determined by using first-stage SCI received in a slot $t_m^{SL}$ , where when a field *"Resource reservation period"* in the SCI is present, a time-frequency resource $t_{m+q \times P'_{rsvp\_RX}}^{SL}$ determined by using the SCI received in the slot $t_m^{SL}$ overlaps with a time-frequency resource location $R_{x,y+j \times P'_{rsvp\_TX}}$ of a candidate resource, $R_{x,y}$ indicates a location of a resource whether to be excluded currently, and $R_{x,y+j \times P'_{rsvp\_TX}}$ indicates a location of a resource for subsequent periodic transmission if a current resource $R_{x,y}$ is selected for data transmission. q = 1,2, ... , or Q, and j = 0,1, ... , or $C_{resel}$- 1. $P'_{rsvp\_TX}$ represents a physical periodicity of the transmitter UE, and is a logical periodicity corresponding to $P_{rsvpTX}$. $P'_{rsvp\_RX}$ represents a physical periodicity that is of the receiver UE and that is indicated by a higher layer parameter *sl-ResourceReservePeriodList,* is obtained by decoding the received SCI, and is a logical periodicity corresponding to $P_{rsvpRX}$. $C_{resel}$ represents a quantity of periodicities of to-be-reserved resources of a service with a periodicity of $P'_{rsvp\_TX}$ configured by a higher layer. If $P_{rsvp\_RX} < T_{scal}$, $Q = \left\lceil \frac{T_{scal}}{P_{rsvp\_RX}} \right\rceil$ . Otherwise, Q = 1.

If $P_{rsvp\_RX} \leq T_{scal}$, $Q = \left\lceil \frac{T_{scal}}{P_{rsvp\_RX}} \right\rceil$ . Otherwise, Q = 1.

If a slot n belongs to an SL resource pool, $t_{n'}^{SL} = n$ ; or if a slot n does not belong to an SL resource pool, $t_{n'}^{SL}$ is a 1st slot that is after the slot n and that belongs to the SL resource pool. $T_{scal}$ represents an interval corresponding to a resource selection window length $T_2$-$T_1$, with a unit of ms.

In an example, as shown in FIG. 4(b), the terminal device receives first-stage SCI on a time-frequency resource 1, and successfully decodes the first-stage SCI. A time-frequency resource reserved by using the first-stage SCI includes a periodically reserved time-frequency resource 4, and it is indicated that a resource reservation periodicity is 200 ms.

In this case, the device needs to determine whether a time-frequency resource 2 in the resource selection window needs to be excluded, and knows that a reservation periodicity of the device is 50 ms. It may be determined that if the time-frequency resource 2 is selected, a periodically reserved resource includes a time-frequency resource 3 and the time-frequency resource 4. In this case, the time-frequency resource 4 that needs to be periodically reserved by the terminal device overlaps the periodically reserved time-frequency resource 4 indicated by using SCI of another terminal device, and when an RSRP value of the time-frequency resource 1 is greater than the RSRP threshold determined based on a priority indicated by the first-stage SCI, the time-frequency resource 2 is excluded from the resource pool.

Step 7: If remaining resources in $S_A$ are less than X% of the total resources in the resource selection window, where a value of X% is configured by the resource pool, the RSRP threshold determined in step 3 is increased (for example, increased by 3 dB each time), until the remaining resources in $S_A$ are not less than X% of the total resources in the resource selection window.

According to the foregoing steps, the terminal device reports $S_A$ to the higher layer (for example, a medium access control (Media Access Control, MAC) layer), so that the higher layer selects a required resource based on $S_A$. After the resource selection, the terminal device notifies another UE of a reservation message by using SCI. The reservation message indicates the selected resource, and data transmission may be performed on the selected time-frequency resource.

The foregoing resource selection process is a resource selection process applicable to NR-V2X. A resource selection process for LTE-V2X is similar to that for NR-V2X, but there are some differences in a reported resource set. For LTE-V2X, in step 7, if the remaining resources in $S_A$ are less than 20% of the total resources in the resource selection window, the RSRP threshold determined in step 3 is increased (for example, increased by 3 dB each time), until the remaining resources in $S_A$ are not less than 20% of the total resources in the resource selection window. Further, for LTE-V2X, step 8 may be further included:

Sort resources in the resource set $S_A$ based on a received signal strength indicator (Received Signal Strengthen Indicator, RSSI) of each resource in the resource set $S_A$ in step 7 in ascending order of values of RSSIs, and sequentially move a resource with a smallest RSSI to a resource set $S_B$, until a quantity of resources in the resource set $S_B$ is equal to 20% of the total resources in the resource selection window. The terminal device reports the resource set $S_B$ to the higher layer, so that the higher layer selects a required resource based on the resource set $S_B$. It should be noted that 20% is an example, or another percentage may be used. This is not limited in embodiments of this application.

A smaller RSSI indicates less interference to the another terminal device caused by sending information on a resource.

If resource pools used for LTE-V2X and NR-V2X partially or completely overlap and both LTE-V2X and NR-V2X adopts the mode 2 for resource allocation, because neither LTE-V2X nor NR-V2X can identify SCI of each other, in the existing resource selection procedure, resource periodicity reservation information of each other cannot be sensed. In this case, a conflict between a resource used by a UE using LTE-V2X and a resource used by a UE using NR-V2X may occur, and consequently coexistence cannot be achieved.

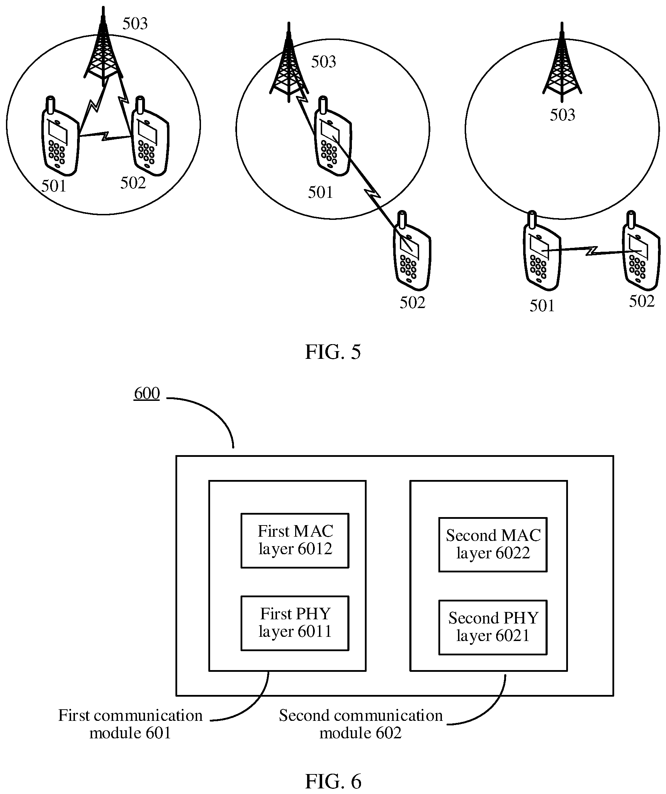

Embodiments of this application provide a resource selection method. The method can reduce a resource conflict between an LTE-V2X apparatus and an NR-V2X apparatus when the LTE-V2X apparatus and the NR-V2X apparatus coexist. The resource selection method provided in embodiments of this application may be applied to a system for direct communication between user sides in V2X, D2D, or the like. The technical solutions provided in embodiments of this application are also applicable to a communication scenario with network coverage or without network coverage. FIG. 5 shows a communication system applicable to a resource selection method according to an embodiment of this application. The communication system 500 may include a terminal apparatus 501 and a terminal apparatus 502. Optionally, the communication system 500 may further include a network device 503.

Both the terminal apparatus 501 and the terminal apparatus 502 may be within coverage of the network device 503, or one of the terminal apparatus 501 and the terminal apparatus 502 may not be within coverage of the network device 503. For example, the terminal apparatus 501 is not within coverage of the network device. Alternatively, neither the terminal apparatus 501 nor the terminal apparatus 502 is within coverage of the network device 503. This is not specifically limited in this application.

The network device includes, for example, an access network (access network, AN) device such as a base station (for example, an access point), and may be a device that communicates with a wireless terminal device via an air interface through one or more cells in an access network. Alternatively, for example, a network device in a vehicle-to-everything (vehicle-to-everything, V2X) technology is a road side unit (road side unit, RSU). The RSU may be a stationary infrastructure entity supporting a V2X application, and may exchange a message with another entity supporting the V2X application. The network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a 5th generation mobile communication technology (5th generation, 5G) NR system (also referred to as an NR system for short), or may include a central unit (central unit, CU) and a distributed unit (distributed unit, DU) in a cloud access network (cloud radio access network, Cloud RAN) system. This is not limited in this embodiment of this application.

The terminal apparatus may also be referred to as a user equipment and a terminal device, and includes a device that provides voice and/or data connectivity for a user. The terminal device may communicate with a core network through a radio access network (radio access network, RAN), and exchange voice or data with the RAN, or interact voice or data with the RAN. The terminal device may include a user equipment (user equipment, UE), a wireless user equipment, a mobile user equipment, a device-to-device (device-to-device, D2D) user equipment, and a vehicle-to-everything (vehicle-to-everything, V2X) user equipment. For example, a user equipment in a vehicle-to-everything (vehicle-to-everything, V2X) technology is a roadside unit RSU, an on board module (on board unit, OBU), or a telematics box (telematics box, T-BOX). Alternatively, the terminal device further includes a machine-to-machine/machine-type communication (machine-to-machine/machine-type communication, M2M/MTC) user equipment, an internet of things (internet of things, IoT) user equipment, a subscription unit (subscriber unit), a subscription station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile user equipment, a portable, pocket-sized, handheld, or computer-built-in mobile apparatus, and the like. For example, the terminal device may be a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

In embodiments of this application, an apparatus configured to implement a function of the user equipment may be a terminal device, or may be an apparatus that can support the terminal device in implementing the function, for example, a chip system. The apparatus may be installed in the terminal device. In this embodiment of this application, the chip system may include a chip, or may include a chip and another discrete component.

The following describes an LTE-V2X device and an NR-V2X device in embodiments of this application. The LTE-V2X device and the NR-V2X device in embodiments of this application may be the foregoing terminal apparatuses.

The LTE-V2X device may be understood as a device that supports only LTE communication, for example, a terminal device that supports LTE communication. The LTE-V2X device includes a communication module, and the communication module is used for communication using an evolved universal terrestrial radio access (evolved universal terrestrial radio access, E-UTRA) technology. The LTE-V2X device may receive or send first information. The first information is, for example, sidelink (sidelink, SL) information using E-UTRA radio access. The communication module includes at least a physical layer and a medium access control layer that are used for LTE communication.

For the NR-V2X device, this embodiment of this application provides two possible structures. The NR-V2X device may be, for example, a terminal device.

Structure 1: The NR-V2X may support at least NR communication, where the NR-V2X device includes at least one communication module, and the communication module is used for communication using an NR radio access technology. The NR-V2X communication may receive or send second information. The second information may be, for example, SL information using the NR radio access technology. The communication module includes at least a physical layer and a medium access control layer that are used for NR communication.

Structure 2: The NR-V2X device supports both NR communication and LTE communication. For the structure 2, the NR-V2X communication device may include one communication module that supports both NR communication and LTE communication, or may include two communication modules, where one communication module supports NR communication, and the other communication module supports LTE communication. The NR-V2X communication may receive or send first information, and receive or send second information. The first information may be, for example, SL information using E-UTRA radio access. The second information may be, for example, SL information using an NR radio access technology.

The SL information may include an SL channel and/or an SL signal. The SL channel includes at least one of the following channels: a PSSCH, a PSCCH, a physical sidelink feedback channel (physical sidelink feedback channel, PSFCH), a physical sidelink broadcast channel (physical sidelink broadcast channel, PSBCH), a physical sidelink discovery channel (physical sidelink discovery channel, PSDCH), and other channels. A specific SL channel is not limited in this embodiment of this application. The SL signal includes at least one of the following signals: a demodulation reference signal (demodulation reference signal, DMRS), a channel state information-reference signal (channel state information-reference signal, CSI-RS), a phase tracking reference signal (phase tracking reference signal, PT-RS), a positioning reference signal (positioning reference signal, PRS), a primary synchronization signal (primary synchronization signal, PSS), a secondary synchronization signal (secondary synchronization signal, SSS), and the like. A specific SL signal is not limited in this embodiment of this application.

It should be noted that the two NR-V2X devices may further support a future communication network, for example, 6G communication. For example, the NR-V2X devices may be a device that supports both NR and 6G communication, and a communication device that supports LTE, NR, and 6G communication.

A resource pool may be configured by the network device, or may be pre-configured, or may be predefined.

When the network device configures a resource pool, the network device may configure a resource pool by using resource pool configuration information. The resource pool configuration information includes a time domain resource and a frequency domain resource of the resource pool, and may further include information such as resource information and a transmission parameter for sending or receiving an SL channel and an SL signal in the resource pool. The resource pool may be a sending resource pool or a receiving resource pool, respectively configured to send and receive information.

The resource pool configuration information may include LTE resource pool configuration information, NR resource pool information, or LTE-NR resource pool configuration information. The LTE resource pool configuration information is used to configure an LTE resource pool. The terminal device may obtain an LTE-V2X resource pool based on the LTE resource pool configuration information, to send or receive the first information. The NR resource pool configuration information is used to configure an NR resource pool. The terminal device obtains an NR-V2X resource pool based on the NR resource pool configuration information, to send or receive the second information. Optionally, the LTE resource pool configuration information and the NR resource pool configuration information may be included in a same piece of configuration information. The terminal device obtains, based on the LTE-NR resource pool configuration information, a resource pool shared by LTE-V2X and NR-V2X, and the terminal device obtains, based on the LTE-NR resource pool configuration information, the resource pool shared by LTE-V2X and NR-V2X, to send or receive the first information, and send or receive the second information.

Optionally, the LTE resource pool configuration information may include at least one of a first resource reservation periodicity set, a first sub-channel size, and a first sub-channel quantity, and the second configuration information includes at least one of a second resource reservation periodicity set, a second sub-channel size, and a second sub-channel quantity.

Optionally, the first resource reservation periodicity set is the same as the second resource reservation periodicity set, the first sub-channel size is the same as the second sub-channel size, and/or the first sub-channel quantity is the same as the second sub-channel quantity.

The LTE-V2X resource pool and the NR-V2X resource pool may partially or completely overlap. The partial overlapping means that some resources in the LTE-V2X resource pool are the same as resources in the NR-V2X resource pool, and the complete overlapping means that resources in the LTE-V2X resource pool are the same as resources in the NR-V2X resource pool. The LTE-V2X resource pool may be referred to as a first resource pool, and the NR-V2X resource pool may be referred to as a second resource pool. When resources in the first resource pool partially or completely overlap resources in the second resource pool, it may be considered that the first resource pool and the second resource pool are resource pools that are shared with each other. The resource pool in this embodiment of this application may be configured by the network device for the terminal device, or may be pre-configured. The first resource pool and the second resource pool each may include a plurality of candidate single-slot resources, each candidate single-slot resource may also be referred to as a time-frequency resource, and each single-slot candidate resource includes one slot and $L_{subCH}$ consecutive sub-channels in the slot. When a quantity of resources is calculated, one time-frequency resource may be considered as one resource. The first resource pool is used for resource selection in LTE communication, and the second resource pool is used for resource selection in NR communication.

The LTE-V2X device and the NR-V2X device coexist on a same channel, and resources in the LTE resource pool and resources in the NR resource pool partially or completely overlap. When the resources in the LTE resource pool and the resources in the NR resource pool completely overlap, the LTE-V2X device and the NR-V2X device coexist in a same resource pool. Both the LTE-V2X device and the NR-V2X device may use a resource allocation mode 2. In this mode, the LTE-V2X device can learn, through sensing, only the first information at a sensing stage, and the NR-V2X device learns, through sensing, the first information and the second information at the sensing stage, respectively used for resource exclusion for the first information and resource exclusion for the second information.

In this embodiment of this application, because the NR-V2X device can support both LTE and NR communication, and the NR-V2X device may identify SCI in the LTE technology and SCI in the NR technology, a resource reservation status of another LTE-V2X device and a resource reservation status of the NR-V2X device may be learned of based on received SCI. This can avoid a resource conflict between the LTE-V2X apparatus and the NR-V2X apparatus when an LTE-V2X communication requirement and an NR-V2X communication requirement coexist.

The following describes a specific structure of an NR-V2X device provided in this embodiment of this application and a resource selection process.

FIG. 6 is a diagram of a structure of an NR-V2X device according to an embodiment of this application. As shown in FIG. 6, the NR-V2X device 600 includes a first communication module 601 and a second communication module 602. The first communication module 601 is used for communication using a first radio access technology, the second communication module 602 is used for communication using a second radio access technology. The first communication module 601 includes at least a first physical layer 6011 (a first PHY layer) and a first medium access control layer 6012 (a first MAC layer), and the second communication module 602 includes at least a second physical layer 6021 (a second PHY layer) and a second medium access control layer 6022 (a second MAC layer).

In an optional alternative implementation, it may also be considered that the NR-V2X device provided in this embodiment of this application includes one communication module. The communication module may be used for both communication using the first radio access technology and communication using the second radio access technology. The communication module includes a first physical layer and a first medium access control layer, and the first physical layer and the first medium access control layer are used for communication using the first radio access technology. The communication module further includes a second physical layer and a second medium access control layer, and the second physical layer and the second medium access control layer are used for communication using the second radio access technology.

The first radio access technology may be E-UTRA, and the second radio access technology may be NR.

The NR-V2X device and the LTE-V2X device include the following sublayers: a physical (Physical, PHY) layer, a medium access control (Medium Access Control, MAC) layer, a radio link control (Radio Link Control, RLC) layer, and a packet data convergence protocol (Packet Data Convergence Protocol, PDCP). The MAC layer provides a service for the RLC layer in a form of a logical channel, and is mainly configured to: match a logical channel and a transmission channel, and multiplex a plurality of MAC service data units (service data units, SDUs) that belong to one logical channel (radio bearer) or different logical channels (radio bearers) into a same MAC packet data unit (packet data unit, PDU) and send the MAC packet data unit to the physical layer. Reversely, a MAC packet data unit is demultiplexed into a plurality of MAC service data units. The MAC layer is further configured to implement functions such as error correction by using a HARQ, scheduling processing, logical channel priority processing, scheduling information reporting, and random access procedure processing. The physical layer is used to implement management coding/decoding, modulation/demodulation, multi-antenna mapping, and another function of the physical layer. The physical layer provides a service for the MAC layer in a form of a transmission channel. The first physical layer and the second physical layer may implement a function of the foregoing physical layer, and the first medium access control layer and the second medium access control layer may implement a function of the foregoing medium access control layer.

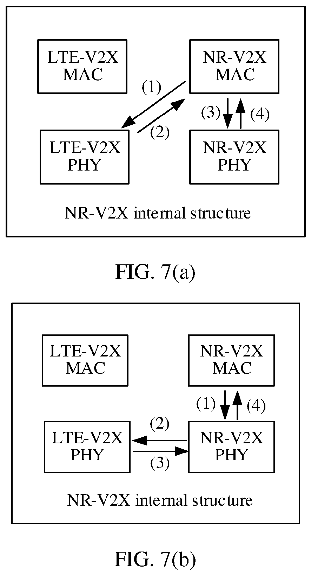

FIG. 7(a) and FIG. 7(b) are a diagram of information exchange structures in resource selection processes of two NR-V2X devices according to an embodiment. FIG. 7(a) shows one information exchange structure in a resource selection process according to an embodiment of this application. An NR-V2X device in FIG. 7(a) includes a first physical layer (LTE-V2X PHY layer), a second physical layer (NR-V2X PHY layer), a first medium access control layer (LTE-V2X MAC layer), and a second medium access control layer (NR-V2X MAC layer). In the NR-V2X device shown in FIG. 7(a), the LTE-V2X PHY layer may directly communicate with the NR-V2X MAC layer, and the NR-V2X PHY layer may communicate with the NR-V2X MAC layer. The communication may be information exchange. In an optional implementation, there is a first interface between the LTE-V2X PHY layer and the NR-V2X MAC layer, and information exchange may be performed through the first interface.

FIG. 7(b) shows the other information exchange structure. FIG. 7(b) includes a first physical layer (LTE-V2X PHY layer), a second physical layer (NR-V2X PHY layer), a first medium access control layer (LTE-V2X MAC layer), and a second medium access control layer (NR-V2X MAC layer). In the terminal device shown in FIG. 7(b), the LTE-V2X PHY layer may communicate with the NR-V2X PHY layer, and the NR-V2X PHY layer may communicate with the LTE-V2X PHY layer and the NR-V2X MAC layer. The communication may be information exchange. In an optional implementation, there is a first interface between the LTE-V2X PHY layer and the NR-V2X PHY layer, and information exchange may be performed through the first interface.

The following describes a method in which the NR-V2X device shown in FIG. 7(a) performs resource selection.

It may be understood that, for a device that can perform both LTE-V2X communication and NR-V2X communication, because the device can receive and decode SCI information in LTE, the device can perform a resource sensing process during LTE communication, to learn of a resource reservation status of another LTE device, so that in a process in which the NR-V2X device performs resource selection, a resource conflict between the NR-V2X device and the another LTE device can be avoided, and interference to the another LTE device can also be avoided.

Specifically, the NR-V2X device can perform both a resource selection process in a mode 2 in LTE and a resource selection process in a mode 2 in NR.

For the resource selection process in the mode 2 in LTE, as described above, the NR-V2X device first determines a resource selection window, determines a resource sensing window, performs sensing in a sensing slot, and excludes a resource that meets a condition from a resource pool. For a specific process, refer to the foregoing descriptions of the resource selection process in the mode 2 in LTE. After the terminal device performs steps 1 to 8, the LTE-V2X PHY layer of the terminal device may determine a first resource set, and report the first resource set to the NR-V2X MAC layer through the first interface.

For a resource selection process in the mode 2 in NR, still refer to the foregoing descriptions of the resource selection in the mode 2 in NR. After the NR-V2X device performs steps 1 to 7, the NR-V2X PHY layer of the NR-V2X device determines a second resource set, and reports the second resource set to the NR-V2X MAC layer.

After receiving the first resource set and the second resource set, the NR-V2X MAC layer of the NR-V2X device selects a resource from an intersection set of the first resource set and the second resource set, for PSSCH transmission or PSCCH transmission. Because both resource reservation statuses of the another LTE device and another NR device are considered, a conflict between the resource selection processes in LTE and NR can be effectively avoided.

In an optional implementation, before the LTE-V2X PHY layer reports the first resource set to the NR-V2X MAC layer, the NR-V2X MAC layer may first request the LTE-V2X PHY layer to determine the first resource set, to trigger a resource selection procedure at the LTE-V2X PHY layer. Specifically, the NR-V2X MAC layer may send one or more of the following parameters to the LTE-V2X PHY layer, to trigger the LTE-V2X PHY layer to perform resource selection: information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsvp\_TX}$), indication information of a resource selection mechanism (for example, indicating only full sensing, only partial sensing, only random resource selection, or a combination thereof). The LTE-V2X PHY layer performs resource selection based on the foregoing parameters, and reports the first resource set to the NR-V2X MAC layer.

Optionally, the NR-V2X MAC layer may send the one or more parameters to the LTE-V2X PHY layer based on first information, where the first information may be configuration information.

For the LTE-V2X PHY layer, it is only a MAC layer that indicates a request, and the first information carried in the request is configured in a format of request information transferred by the LTE-V2X MAC layer. The LTE-V2X PHY layer receives the request, and does not distinguish whether the request is transferred from the LTE-MAC layer or the NR-MAC layer.

Similarly, the NR-V2X MAC layer requests the NR-V2X PHY layer to determine the second resource set, and the NR-V2X MAC layer may send one or more of the foregoing parameters to the NR-V2X PHY layer, to trigger the NR-V2X PHY layer to perform resource selection. The NR-V2X PHY layer performs resource selection based on the foregoing parameters, and reports the second resource set to the NR-V2X MAC layer.

In an optional implementation, the NR-V2X MAC layer may determine a first candidate resource set. If a ratio of a quantity of resources in the intersection set of the first resource set and the second resource set to a quantity of resources in a second resource pool is less than a first threshold, the first candidate resource set includes the intersection set, and at least one resource in a difference set of the first resource set relative to the intersection set. The foregoing solution may also be understood as that a resource is selected from the first resource set to be added to the intersection set of the first resource set and the second resource set, to obtain the first candidate resource set. Specifically, it is assumed that a first resource pool is the same as the second resource pool, and is a resource pool shared by LTE and NR. The resource pool includes a total of 10 time-frequency resources: a time-frequency resource 1 to a time-frequency resource 10. The first resource set includes the time-frequency resources 1 to 5. The second resource set includes the time-frequency resources 3 to 7. When performing resource selection, the NR-V2X MAC layer selects a resource from the intersection set of the first resource set and the second resource set, that is, the time-frequency resources 3 to 5. In this case, a quantity of time-frequency resources in the intersection set is 3. If a ratio of the quantity to a quantity of resources in the resource pool is 30%, assuming that 30% is less than the first threshold, a resource is selected from the time-frequency resources 1 and 2 in the time-frequency resource set in the first resource set to the intersection set of the first resource set and the second resource set. Assuming that the time-frequency resource 1 is selected to the intersection set, the NR-V2X MAC layer may determine that the first candidate resource set is {time-frequency resource 1, time-frequency resources 3 to 5}. The NR-V2X MAC layer selects a resource from the time-frequency resource 1 and the time-frequency resources 3 to 5 for PSCCH transmission and/or PSSCH transmission.

Optionally, the first threshold is X%. X is any value ranging from 0 to 100. For example, the value of X may be any one of 20, 35, or 50.

For the terminal device shown in FIG. 7(a), because information exchange may be directly performed between the LTE-V2X PHY layer and the NR-V2X MAC layer, one or more of the following advantages are achieved:

Because information exchange may be directly performed between the LTE-V2X PHY layer and the NR-V2X MAC layer, the NR-V2X MAC layer does not need to first send a resource transmission requirement and a parameter to the LTE-V2X MAC layer. In this scenario, if the LTE-V2X MAC layer receives the transmission requirement and the parameter that are sent by the NR-V2X MAC layer, the LTE-V2X MAC layer considers that the LTE-V2X MAC layer has a transmission requirement, and then selects a resource for information transmission based on a resource exclusion process and a resource selection process, to finally form a transport block to send the corresponding information. However, the NR-V2X MAC layer performs a same procedure, and a transport block is formed based on the resource selected by LTE-V2X, to send the corresponding information. In this case, a same device repeatedly sends same information.

Because the NR-V2X device provided in this embodiment of this application can receive and decode SCI information in LTE, the device can perform a resource sensing process during LTE communication, to learn of a resource reservation status of another LTE device, so that in a process in which the NR-V2X device performs resource selection, a resource conflict between the NR-V2X device and the another LTE device can be avoided, and interference to the another LTE device can also be avoided.

It may be understood that, when the NR-V2X device performs resource selection, interference to another LTE-V2X device is considered, and therefore, a quantity of candidate resources of the NR-V2X device is decreased in comparison with that in a case in which interference to the LTE-V2X device is not considered. This is because a resource that may be reserved by the another LTE-V2X device is further excluded from the candidate resources of the NR-V2X device. In this scenario, an embodiment of this application further provides a resource selection method, to resolve a problem of how to add a resource when candidate resources of an NR-V2X device are insufficient. The resource selection method provided in this embodiment of this application may be performed on the NR-V2X device shown in FIG. 7(a), the NR-V2X device shown in FIG. 7(b), or another device that can support both LTE communication and NR communication. This is not limited in embodiments of this application.

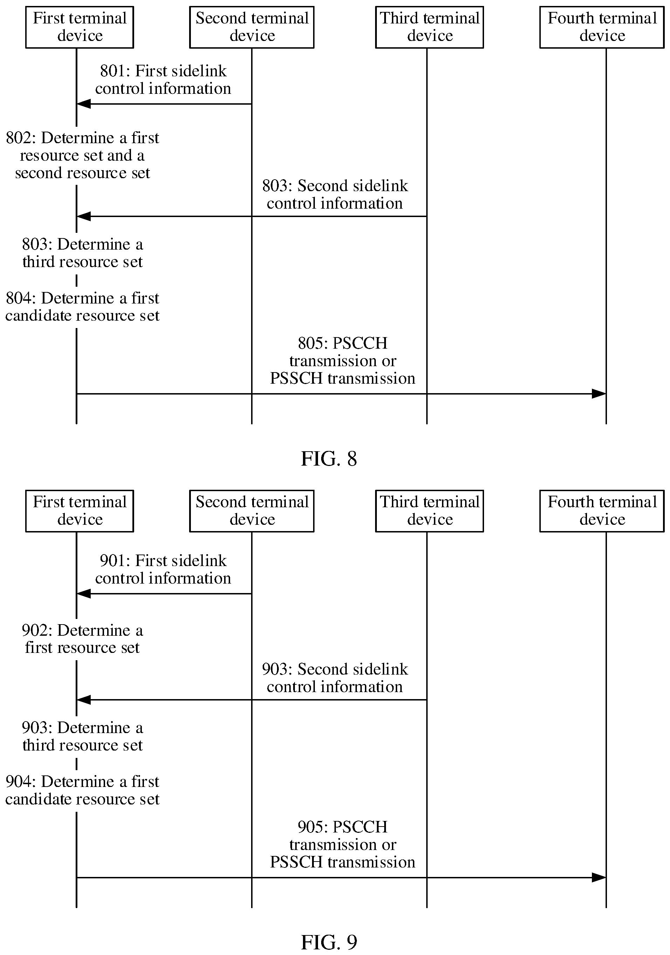

FIG. 8 is a flowchart of a resource selection method according to an embodiment of this application. Refer to FIG. 8. The resource selection method provided in this embodiment of this application may be performed by a first terminal device. The method includes the following steps.

801: The first terminal device receives first sidelink control information from a second terminal device, where the first sidelink control information is used to determine a first resource set from a resource pool.

In an optional implementation, the first sidelink control information is information in an evolved universal terrestrial radio access E-UTRA technology. In other words, the first sidelink control information may be information used for LTE communication.

The first terminal device is a terminal device that supports both LTE communication and NR communication, and the second terminal device is a terminal device that supports at least LTE communication.

For the resource pool in this embodiment of this application, refer to the descriptions of the LTE-V2X resource pool and the NR-V2X resource pool in the foregoing embodiment. Optionally, in this embodiment of this application, an example in which LTE-V2X and NR-V2X share a resource pool is used. In other words, a resource in a first resource pool and a resource in a second resource pool completely overlap. A resource pool is configured by a network device for the terminal device, or a resource pool is (pre-)configured. The resource pool may be used to select a resource for LTE communication, or may be used to select a resource for NR communication. It may be understood that the first resource pool and the second resource pool may alternatively partially overlap. This is not limited in embodiments of this application.

Before the first terminal device receives the first sidelink control information, the method may further include: The first terminal device determines a resource selection window and a resource sensing window. For details, refer to the steps in the resource selection in the mode 2.

After receiving the first sidelink control information, the first terminal device decodes the first sidelink control information, to obtain a parameter in the first sidelink control information. The parameter may include priority information (for example, a first priority) and a time-frequency resource (a first time-frequency resource) indicated by the first sidelink control information. The first terminal device determines a first RSRP threshold according to step 3 in the resource selection in the mode 2 by using the first priority indicated by the first sidelink control information.

The method may further include: The first terminal device uses a resource in the resource pool as an initialized candidate resource set, and excludes a time-frequency resource (if any) that is not sensed from the resource pool.

Optionally, the first terminal device performs RSRP measurement based on the first sidelink control information.

For a specific process, refer to step 6 in the resource selection in the mode 2. When an RSRP measurement value that is of the first time-frequency resource and that is obtained through measurement is greater than the first RSRP threshold, the first terminal device excludes the first time-frequency resource from the first resource pool.

It may be understood that the first terminal device performs sensing in a plurality of slots in the resource sensing window. If another terminal device sends sidelink control information in the slots, the terminal device receives the corresponding sidelink control information in the sensing slots, where the sidelink control information indicates or is used to reserve one or more resources. An RSRP measurement value of the one or more resources is determined based on the sidelink control information, and the RSRP measurement value is compared with the first RSRP threshold, to determine whether to exclude, from the first resource pool, the resource indicated or reserved by using the sidelink control information.

A plurality of pieces of first sidelink control information may be obtained in the resource sensing window, and a plurality of first time-frequency resources are excluded from the resource pool based on the plurality of pieces of first sidelink control information, to determine the first resource set from the first resource pool.

Optionally, a ratio of a quantity of resources in the first resource set to a quantity of resources in the resource pool is greater than or equal to a threshold, and the threshold may be, for example, N%. After the foregoing step of resource exclusion is performed, if the ratio of the quantity of resources in the first resource set to the quantity of resources in the first resource pool is less than N%, refer to step 7 in the resource selection in the mode 2, and the first RSRP threshold is increased, to cause the ratio of the quantity of resources in the first resource set to the quantity of resources in the first resource pool to be greater than or equal to N%. A value of N% may be (pre-)configured by the resource pool.

802: The first terminal device determines a second resource set from the first resource set based on a received signal strength indicator RSSI of at least one time-frequency resource in the first resource set.

For the resource selection process in the mode 2 in LTE, after the first resource set is determined, the first terminal device sequentially moves a resource with a smallest RSSI from the first resource set to the second resource set based on a value of an RSSI of each resource in the first resource set, until a percentage of a quantity of resources in the second resource set to the quantity of resources in the resource pool is greater than or equal to a second threshold.

Optionally, the second threshold may be 20%.

For example, it is assumed that the first resource pool and the second resource pool are a same resource pool. The resource pool includes a total of 20 time-frequency resources: a time-frequency resource 1 to a time-frequency resource 20. The terminal device determines that the first resource set includes {time-frequency resource 1 to time-frequency resource 6, time-frequency resource 11 to time-frequency resource 20}. Further, the time-frequency resource 1 to the time-frequency resource 6 and the time-frequency resource 11 to the time-frequency resource 20 are sequentially moved to the second resource set in ascending order of RSSIs.

It is assumed that an order of the time-frequency resources 1 to 6 and the time-frequency resources 11 to 20 sorted based on RSSIs is as follows: time-frequency resource 5<time-frequency resource 1<time-frequency resource 12<time-frequency resource 4<time-frequency resource 16<time-frequency resource 3.... In this case, the terminal device first moves the time-frequency resource 5 to the second resource set. In this case, the quantity of resources in the second resource set is 1, the quantity of resources in the resource pool is 20, and the percentage is 5%. For example, the second threshold is 20%. In this case, the terminal device continues to select the time-frequency resource 1 with a smallest RSSI from the first resource set and move the time-frequency resource 1 to the second resource set. In this case, the second resource set includes the time-frequency resource 5 and the time-frequency resource 1, the quantity of resources in the second resource set is 2, accounting for 10% of the resources in the resource pool, and the second threshold is not reached. The terminal device further moves the time-frequency resource 12 and the time-frequency resource 4 to the second resource set. In this case, the quantity of resources in the second resource set accounts for 20% of the resources in the resource pool, and the second threshold is reached. The terminal device may determine that resources in the second resource set are {time-frequency resource 1, time-frequency resource 4, time-frequency resource 5, time-frequency resource 12}.

Optionally, a process in which the first terminal device determines the second resource set may also be understood as follows: The first terminal device determines the second resource set based on the first time-frequency resource indicated by the first sidelink control information, an RSRP threshold of the first time-frequency resource, the first priority indicated by the first sidelink control information, and the RSSI of the first time-frequency resource.

803: The first terminal device receives second sidelink control information from a third terminal device, where the second sidelink control information is used to determine a third resource set from the second resource pool.

For a process of determining the third resource set from the resource pool based on the second sidelink control information, refer to step 801. Same parts are not described again. The following describes a difference between step 801 and step 803.

The third terminal device is a terminal device that supports at least NR communication. Alternatively, the third terminal device may be the foregoing second terminal device, and in this case, the second terminal device is a device that supports both NR communication and LTE communication.

In an optional implementation, the second sidelink control information is information in a new radio NR technology. In other words, the second sidelink control information may be information used for NR communication.

The second sidelink control information indicates a second priority and a second time-frequency resource. The terminal device determines a second RSRP threshold according to step 3 in the resource selection in the mode 2 by using the second priority indicated by the second sidelink control information. The terminal device performs RSRP measurement based on the second sidelink control information. For a specific process, refer to step 6 in the resource selection in the mode 2. When an RSRP value that is of the second time-frequency resource and that is obtained through measurement is greater than the second RSRP threshold, the terminal device excludes the second time-frequency resource from the second resource pool.

Different from the mode 2 in LTE, in the resource selection process in the mode 2 in NR, it is not necessary to further filter a determined candidate resource set through sorting based on an RSSI. Therefore, in this embodiment of this application, the first terminal device excludes one or more second time-frequency resources based on one or more pieces of second sidelink control information, to obtain the third resource set from the second resource pool.

Optionally, if there is a resource that is not sensed in the resource sensing window, the third time-frequency resource is excluded from the resource pool, and the resource that is not sensed is excluded from the second resource pool, to obtain the third resource set.

Optionally, a ratio of a quantity of resources in the third resource set to a quantity of resources in the second resource pool is greater than or equal to a threshold, and the threshold may be, for example, M%. After the foregoing step of resource exclusion is performed, if the ratio of the quantity of resources in the third resource set to the quantity of resources in the second resource pool is less than M%, refer to step 7 in the resource selection in the mode 2, and the second RSRP threshold is increased, to cause the ratio of the quantity of resources in the third resource set to the quantity of resources in the second resource pool to be greater than or equal to M%. A value of M% may be configured by the resource pool, preconfigured, indicated by the network device, or predefined.

An example in which the resource pool includes a total of 20 time-frequency resources: the time-frequency resource 1 to the time-frequency resource 20 is still used. The first terminal device determines the third resource set after excluding a resource through sensing. For example, the third resource set includes the following resources: {time-frequency resource 1 to 3, time-frequency resource 6, time-frequency resource 8, time-frequency resource 10, time-frequency resource 12 to time-frequency resource 20}.

It should be noted that a sequence between step 801 and step 803 is not limited in this embodiment of this application. The first terminal device may first receive the first sidelink control information and then receive the second sidelink control information, or may first receive the second sidelink control information and then receive the first sidelink control information, or may simultaneously receive the first sidelink control information and the second sidelink control information.

804: The first terminal device determines a first candidate resource set, where when a ratio of a quantity of resources in an intersection set of the second resource set and the third resource set to the quantity of resources in the resource pool is less than a first threshold, the first candidate resource set includes the intersection set, and includes at least one resource in a difference set of the first resource set relative to the intersection set.

The first threshold may be X%, and a value of X may be any value ranging from 1 to 100. The first threshold may be configured by the resource pool, preconfigured, configured by the network device, indicated by the network device, or predefined. The first threshold may be, for example, 20%, 35%, or 50%.

According to the foregoing steps, examples are shown below:

first resource set: {time-frequency resource 1 to time-frequency resource 6, time-frequency resource 11 to time-frequency resource 20};

second resource set: {time-frequency resource 1, time-frequency resource 4, time-frequency resource 5, time-frequency resource 12}; and

third resource set: {time-frequency resources 1 to 3, time-frequency resource 6, time-frequency resource 8, time-frequency resource 10, time-frequency resource 12 to time-frequency resource 20}.

The intersection set of the second resource set and the third resource set is the time-frequency resource 1. A ratio of a quantity of resources in the intersection set to the quantity of resources in the resource pool is 5%. 5% is compared with X%. If 5% is less than X%, the first candidate resource set includes the intersection set, and includes the at least one resource in the difference set of the first resource set relative to the intersection set.

For example, the difference set of the first resource set relative to the intersection set is {time-frequency resource 2 to time-frequency resource 6, time-frequency resource 11 to time-frequency resource 20}, and the first candidate resource set may be, for example, {time-frequency resource 1, time-frequency resource 2}.

In an optional implementation, that the first candidate resource set is determined includes: When the ratio of the quantity of resources in the intersection set of the second resource set and the third resource set to the quantity of resources in the resource pool is less than the first threshold, the first terminal device recovers or selects a resource from the difference set of the first resource set relative to the intersection set, and adds the resource to the intersection set. Based on the foregoing example, the resource in the intersection set is the time-frequency resource 1, and the difference set of the first resource set relative to the intersection set includes {time-frequency resource 2 to time-frequency resource 6, time-frequency resource 11 to time-frequency resource 20}. The first terminal device may select a resource from the time-frequency resource 2 to the time-frequency resource 6, and the time-frequency resource 11 to the time-frequency resource 20, and add the resource to the intersection set, to obtain the first candidate resource set. For example, the time-frequency resource 2 is selected and added to the intersection set, to obtain the first candidate resource set {time-frequency resource 1, time-frequency resource 2}.

In an optional implementation, a resource may be randomly selected from the first resource set, for example, the time-frequency resource 6 is selected. Optionally, the first terminal device may select one or more resources from the first resource set, until a ratio of a quantity of resources in the first candidate resource set to the quantity of resources in the second resource pool is greater than or equal to a third threshold. The third threshold may be configured by the network device. Alternatively, the third threshold may be configured by the resource pool, preconfigured, configured by the network device, indicated by the network device, or predefined. Optionally, the third threshold is less than or equal to the first threshold.

Because the first resource set is a set of resources that have minimum interference to another LTE device and that are determined by the first terminal device through sensing in the resource sensing window, adding a resource from the first resource set can ensure, to the largest extent, that interference to the another LTE device is minimized.

In an optional implementation, the first candidate resource set includes the intersection set, and the first candidate resource set further includes at least one resource in a difference set of the second resource set relative to the intersection set. This may be understood as that the first terminal device may select a resource from the difference set of the second resource set relative to the intersection set, and add the resource to the intersection set.

Based on the foregoing example, the intersection set is {time-frequency resource 1}, and the difference set of the second resource set relative to the intersection set is {time-frequency resource 4, time-frequency resource 5, time-frequency resource 12}. The first candidate resource set may be, for example, {time-frequency resource 1, time-frequency resource 4, time-frequency resource 5}.

In this case, the first terminal device may randomly select a resource from the difference set of the second resource set relative to the intersection set, for example, select the time-frequency resource 4 and the time-frequency resource 5. Optionally, the terminal device may select one or more time-frequency resources from the second resource set, until the ratio of the quantity of resources in the first candidate resource set including the intersection set and the one or more time-frequency resources to the quantity of resources in the second resource pool is greater than or equal to the third threshold. For example, the first candidate resource set may be, for example, {time-frequency resource 1, time-frequency resource 4, time-frequency resource 5}. 3/20=15%, and 15% is greater than or equal to the third threshold.

In an optional implementation, the first candidate resource set includes the intersection set, and includes one or more resources with smallest RSSIs in the difference set of the second resource set relative to the intersection set.

Based on the foregoing example, the intersection set is {time-frequency resource 1}, and the difference set of the second resource set relative to the intersection set is {time-frequency resource 4, time-frequency resource 5, time-frequency resource 12}. A relationship between RSSIs of the time-frequency resource 4, the time-frequency resource 5, and the time-frequency resource 12 is as follows: time-frequency resource 5<time-frequency resource 12<time-frequency resource 4. When the first candidate resource set includes a resource in the difference set of the second resource set relative to the intersection set, the resource is the time-frequency resource 5. When the first candidate resource set includes two resources in the difference set of the second resource set relative to the intersection set, the resources are the time-frequency resource 5 and the time-frequency resource 12.

Because the second resource set is a part of resources with smaller RSSIs in the first resource set, and a smaller RSSI indicates less interference to another terminal device caused by sending information on the resource, selecting a resource from the second resource set and adding the resource to the intersection set can reduce interference to the another terminal device.

In an optional implementation, the first candidate resource set may include the intersection set, and at least one resource in a difference set of an intersection set of the first resource set and the third resource set relative to the second resource set. This may be understood as that the first terminal device may select a resource from the difference set of the intersection set of the first resource set and the third resource set relative to the second resource set, and add the resource to the intersection set, to obtain the first candidate resource set.

For example, the intersection set of the first resource set and the third resource set is {time-frequency resources 1 to 3, time-frequency resource 6, time-frequency resource 12 to time-frequency resource 20}. The difference set of the intersection set relative to the second resource set is {time-frequency resources 2 and 3, time-frequency resource 6, time-frequency resource 13 to time-frequency resource 20}.

Optionally, a resource may be randomly selected from the difference set of the intersection set of the first resource set and the third resource set relative to the second resource set.

Optionally, a resource with a smallest RSSI may be selected from the difference set of the intersection set of the first resource set and the third resource set relative to the second resource set.

For example, the difference set of the intersection set of the first resource set and the third resource set relative to the second resource set is {time-frequency resources 2 and 3, time-frequency resources 6, time-frequency resources 13 to time-frequency resources 20}. Resources in the resource set {time-frequency resources 2 and 3, time-frequency resource 6, time-frequency resource 13 to time-frequency resource 20} are sorted in ascending order of RSSIs. It is assumed that the resources are sorted in ascending order of values of the RSSIs as follows:

time-frequency resource 16<time-frequency resource 3<time-frequency resource<time-frequency resource 13<time-frequency resource 6<....

The first terminal device may recover the time-frequency resource 16, and add the time-frequency resource 16 to the intersection set of the second resource set and the third resource set, to obtain the first candidate resource set. If a ratio of a quantity of resources in an intersection set obtained through resource addition to the quantity of resources in the second resource pool is still less than the first threshold, the foregoing process may continue to be repeated. For example, the terminal device further adds the time-frequency resource 3 to the intersection set of the second resource set and the third resource set, and if the ratio is still less than the third threshold, adds the time-frequency resource 13 to the intersection set to obtain the first candidate resource set, until the ratio of the quantity of resources in the first candidate resource set to the quantity of resources in the second resource pool is greater than or equal to the third threshold.

In an optional implementation, if the ratio of the quantity of resources in the intersection set obtained through resource addition to the quantity of resources in the resource pool cannot be greater than or equal to the third threshold, where the resource addition is performed by selecting a resource from the difference set of the intersection set of the first resource set and the third resource set relative to the second resource set, a resource may continue to be selected from the second resource set, until the ratio of the quantity of resources in the first candidate resource set to the quantity of resources in the second resource pool is greater than or equal to the third threshold. For a manner of selecting a resource from the second resource set, refer to the descriptions in the foregoing implementations.

In an example, that the ratio of the quantity of resources in the intersection set obtained through resource addition to the quantity of resources in the resource pool cannot be greater than or equal to the third threshold, where the resource addition is performed by selecting a resource from the difference set of the intersection set of the first resource set and the third resource set relative to the second resource set means that:

Even if all resources in the difference set of the intersection set of the first resource set and the third resource set relative to the second resource set are added to the intersection set, the ratio of the quantity of resources in the intersection set to the quantity of resources in the resource pool cannot be greater than or equal to the first threshold.

Alternatively, some resources in the difference set of the intersection set of the first resource set and the third resource set relative to the second resource set cannot be added to the intersection set, and consequently, resources that can be added to the intersection set are insufficient.

In an optional implementation, the terminal device may increase the first RSRP threshold, and redetermine the first resource set based on an increased first RSRP threshold, to obtain a fourth resource set. The terminal device may continue to select a resource from the fourth resource set and add the resource to the intersection set. In other words, the first candidate resource set includes the intersection set, and includes at least one resource in a difference set of the fourth resource set relative to the intersection set.

In an example, in a process of determining the first resource set, the terminal device determines the first RSRP threshold according to step 3 in the resource selection in the mode 2 by using the first priority indicated by the first sidelink control information. When an RSRP value of the second time-frequency resource indicated by the first sidelink control information is greater than the first RSRP threshold, the terminal device excludes the second time-frequency resource from the resource pool. If the first RSRP threshold is increased, the first time-frequency resource excluded in the foregoing process may not be excluded. For example, the RSRP value of the first time-frequency resource indicated by the first sidelink control information is greater than the initial first RSRP threshold, but may be less than or equal to the increased first RSRP threshold. In this case, the first time-frequency resource is not excluded, but is moved to the first resource set. A first resource set redetermined based on the increased first RSRP threshold may also be referred to as the fourth resource set.

Optionally, the first RSRP threshold may be increased by 3 dB.

It may be understood that in a manner of increasing the first RSRP threshold, the first resource set is redetermined, to obtain the fourth resource set. A quantity of resources in the fourth resource set is greater than or equal to the quantity of resources in the first resource set. After redetermining the first resource set to obtain the fourth resource set, the terminal device selects a resource from the fourth resource set and adds the resource to the intersection set of the second resource set and the third resource set, to obtain the first candidate resource set.

In an optional implementation, when a ratio of a quantity of resources in an intersection set to which a resource from the first resource set is added to the quantity of resources in the resource pool is still less than the first threshold or the third threshold, in other words, when the ratio of the quantity of resources in the intersection set obtained through resource addition to the quantity of resources in the resource pool cannot be greater than or equal to the first threshold or the third threshold, where the resource addition is performed by selecting a resource from the first resource set, the terminal device may increase the first RSRP threshold, and redetermines the first resource set based on the increased first RSRP threshold to obtain the fourth resource set. The terminal device may continue to select a resource from the fourth resource set and add the resource to the intersection set.

It may be understood that the quantity of resources in the fourth resource set is greater than or equal to the quantity of resources in the first resource set, and the fourth resource set includes the first resource set. Therefore, when the ratio of the quantity of resources in the intersection set to which the resource from the first resource set is added to the quantity of resources in the resource pool is still less than the first threshold or the third threshold, a resource is selected from the fourth resource set, which may also be understood as selecting a resource from a difference set of the fourth resource set relative to the first resource set.

That the ratio of the quantity of resources in the intersection set to which a resource from the first resource set is added to the quantity of resources in the resource pool is still less than the first threshold or the third threshold, and that the ratio of the quantity of resources in the intersection set obtained through resource addition to the quantity of resources in the resource pool cannot be greater than or equal to the first threshold or the third threshold, where the resource addition is performed by selecting a resource from the first resource set may mean that:

All selectable resources in the first resource set have been added to the intersection set, and the ratio of the quantity of resources in the intersection set obtained through resource addition to the quantity of resources in the second resource pool is still less than the first threshold or the third threshold.

805: Select a time-frequency resource from the first candidate resource set, where the selected time-frequency resource is used for PSSCH transmission and/or PSCCH transmission. The PSSCH transmission may be understood as sending sidelink data, and the PSCCH transmission may be understood as sending sidelink control information. Optionally, sidelink control information or sidelink data may be sent to a fourth terminal device on the selected time-frequency resource. The fourth terminal device is a device that supports at least NR communication, the sidelink control information sent to a fourth sidelink device may be sidelink control information in NR communication, and the sidelink data may be sidelink data in NR communication.

The first terminal device in the embodiment of FIG. 8 in this application may be the NR-V2X device shown in FIG. 7(a), the NR-V2X device shown in FIG. 7(b), or another device that can support both LTE communication and NR communication. The following uses the NR-V2X device shown in FIG. 7(b) as an example to describe an optional implementation in which the NR-V2X device performs resource selection according to the foregoing method.

For the NR-V2X device that supports both LTE communication and NR communication in this embodiment of this application, in a process of determining a resource by using a resource allocation procedure in the mode 2, the NR-V2X device may separately perform the resource selection process in the mode 2 in LTE and the resource selection process in the mode 2 in NR, obtain an intersection set of resource sets determined in the two procedures, and select a resource from the intersection set to send information.

Refer to FIG. 7(b).

(1) In the foregoing process, the first terminal device in this embodiment of this application may first request, through the NR-V2X MAC layer, the NR-V2X PHY layer to determine the candidate resource set. Specifically, the NR-V2X MAC layer sends one or more of the following parameters to the NR-V2X PHY layer:

information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsvp\_TX}$), indication information of a resource selection mechanism (for example, indicating only full sensing, only partial sensing, only random resource selection, or a combination thereof).

The parameter may include a parameter used in the resource selection process in LTE and a parameter used in the resource selection process in NR.

Optionally, the NR-V2X MAC layer may send the one or more parameters to the NR-V2X PHY layer based on first information, where the first information may be configuration information.

(2) The NR-V2X PHY layer sends, to the LTE-V2X PHY layer, the parameter that is in the foregoing received parameters and that is used for the resource selection process in LTE, so that the LTE-V2X PHY layer performs resource selection (which may also be referred to as performing LTE sensing). For details, refer to the foregoing resource selection procedure in the mode 2 in LTE.

In a process in which the LTE-V2X PHY layer performs LTE sensing, the first terminal device may receive, through the LTE-V2X PHY layer, and decode the first sidelink control information. After decoding the first sidelink control information, the LTE-V2X PHY layer of the first terminal device obtains a parameter in the first sidelink control information, for example, the first priority and related information of the first time-frequency resource indicated by the first sidelink control information, and determines the RSRP measurement value of the first time-frequency resource.

(3) The LTE-V2X PHY layer sends an LTE sensing result to the NR-V2X PHY layer, where the sensing result includes information such as some or all parameters in the first sidelink control information, the RSRP measurement value of the first time-frequency resource, and the RSSI of the first time-frequency resource, and the LTE sensing result is used by the NR-V2X PHY layer to determine the first resource set and the second resource set based on the information.

For the NR-V2X PHY layer, after receiving the parameter that is sent from the NR-V2X MAC layer and that is used for the resource selection process in NR, the NR-V2X PHY layer performs the resource selection procedure in the mode 2 in NR.

The first terminal device may receive, through the NR-V2X PHY layer, the second sidelink control information, and decode the second sidelink control information. After decoding the second sidelink control information, the NR-V2X PHY layer of the first terminal device obtains a parameter in the second sidelink control information, for example, the second priority, related information of the second time-frequency resource indicated by the second sidelink control information, and the RSRP measurement value of the second time-frequency resource. The NR-V2X PHY layer determines the third resource set based on the information.

(4) After determining the first resource set, the second resource set, and the third resource set, the NR-V2X PHY layer reports the intersection set of the second resource set and the third resource set to the NR-V2X MAC layer.

The NR-V2X PHY layer may determine the first candidate resource set. When the ratio of the quantity of resources in the intersection set of the second resource set and the third resource set to the quantity of resources in the resource pool is less than the first threshold, the first candidate resource set includes the intersection set, and the at least one resource in the difference set of the first resource set relative to the intersection set. For a manner of determining the first candidate resource set, refer to the descriptions in the embodiment of FIG. 8.

FIG. 9 is a flowchart of another resource selection method according to an embodiment of this application. Refer to FIG. 9. The resource selection method provided in this embodiment of this application may be performed by a first terminal device. The method includes the following steps.

901: The first terminal device receives first sidelink control information from a second terminal device, where the first sidelink control information is used to determine a first resource set from a first resource pool.

In an optional implementation, the first sidelink control information is information in an evolved universal terrestrial radio access E-UTRA technology. In other words, the first sidelink control information may be information used for LTE communication.

The first terminal device is a terminal device that supports both LTE communication and NR communication, and the second terminal device is a terminal device that supports at least LTE communication.

For the resource pool, the first sidelink control information, and a specific manner of determining the first resource set from the resource pool based on the first sidelink control information in this embodiment of this application, refer to step 801. Details are not described herein again.

902: The first terminal device receives second sidelink control information from a third terminal device, where the second sidelink control information is used to determine a third resource set from the resource pool.

In an optional implementation, the second sidelink control information is information in a new radio NR technology. In other words, the second sidelink control information may be information used for NR communication.

The third terminal device is a terminal device that supports at least NR communication. Alternatively, the third terminal device may be the foregoing second terminal device, and in this case, the second terminal device is a device that supports both NR communication and LTE communication.

For the second sidelink control information, and a specific manner of determining the third resource set from the second resource pool based on the second sidelink control information in this embodiment of this application, refer to step 803. Details are not described herein again.

903: The first terminal device determines a first candidate resource set, where when a ratio of a quantity of resources in an intersection set of the first resource set and the third resource set to a quantity of resources in the resource pool is less than a first threshold, the first candidate resource set includes the intersection set, and includes at least one resource in a difference set of the first resource set relative to the intersection set. That the first terminal device determines a first candidate resource set includes: selecting a resource from the difference set of the first resource set relative to the intersection set to the intersection set of the first resource set and the third resource set, to obtain the first candidate resource set.

The first threshold may be X%, and a value of X may be any value ranging from 1 to 100. The first threshold may be configured by a network device, or (pre-)configured, or predefined. The first threshold may be, for example, 20%, 35%, or 50%.

In an optional implementation, a resource may be randomly selected from the first resource set.

Optionally, the first terminal device may select one or more resources from the first resource set, until a ratio of a quantity of resources in the first candidate resource set to the quantity of resources in the second resource pool is greater than or equal to a third threshold. The third threshold may be configured by the network device. Alternatively, the third threshold may be configured by the resource pool, preconfigured, or predefined. Optionally, the third threshold is less than or equal to the first threshold.

Because the first resource set is a set of resources that have minimum interference to another LTE device and that are determined by the terminal device through sensing in the resource sensing window, adding a resource from the first resource set can ensure, to the largest extent, that interference to the another LTE device is minimized.

904: Select a time-frequency resource from the first candidate resource set, where the time-frequency resource is used for PSCCH transmission and/or PSSCH transmission.

A main difference between the embodiment of FIG. 9 and the embodiment of FIG. 8 in this application lies in that, in the embodiment of FIG. 8, the first terminal device first determines the first resource set based on the first sidelink control information, and then determines the second resource set based on the first resource set and an RSSI of each resource. In other words, the first terminal device determines the second resource set based on the first sidelink control information and the RSSI of the resource. The first terminal device determines the first candidate resource set, and selects a time-frequency resource from the first candidate resource set to send information. When a quantity of resources in the first resource set and a quantity of resources in a third resource set are less than the first threshold, the first candidate resource set includes the intersection set, and includes the at least one resource in the difference set of the first resource set relative to the intersection set. In the embodiment of FIG. 9, when the resources in the intersection set of the first resource set and the third resource set are insufficient, the first candidate resource set includes the intersection set, and includes the at least one resource in the difference set of the first resource set relative to the intersection set.

In an optional implementation, the determining a first candidate resource set includes: randomly selecting a resource from the difference set of the first resource set relative to the intersection set, and adding the resource to the intersection set, to obtain the first candidate resource set.

In an optional implementation, a resource with a smallest RSSI in the first resource set may be selected and added to the intersection set, to obtain the first candidate resource set.

The first terminal device in the embodiment of FIG. 9 in this application may be the NR-V2X device shown in FIG. 7(a), the NR-V2X device shown in FIG. 7(b), or another device that can support both LTE communication and NR communication. The following uses the NR-V2X device shown in FIG. 7(b) as an example to describe an optional implementation in which the NR-V2X device performs resource selection according to the foregoing method.

For the NR-V2X device that supports both LTE communication and NR communication in this embodiment of this application, in a process of determining a resource by using a resource allocation procedure in the mode 2, the NR-V2X device may separately perform the resource selection process in the mode 2 in LTE and the resource selection process in the mode 2 in NR, obtain an intersection set of resource sets determined in the two procedures, and select a resource from the intersection set to send information.

Refer to FIG. 7(b).

(1) In the foregoing process, the first terminal device in this embodiment of this application may first request, through the NR-V2X MAC layer, the NR-V2X PHY layer to determine the candidate resource set. Specifically, the NR-V2X MAC layer sends one or more of the following parameters to the NR-V2X PHY layer:

information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsvp\_TX}$), indication information of a resource selection mechanism (for example, indicating only full sensing, only partial sensing, only random resource selection, or a combination thereof).

The parameter may include a parameter used in the resource selection process in LTE and a parameter used in the resource selection process in NR.

Optionally, the NR-V2X MAC layer may send the one or more parameters to the NR-V2X PHY layer based on first information, where the first information may be configuration information.

(2) The NR-V2X PHY layer sends, to the LTE-V2X PHY layer, the parameter that is in the foregoing received parameters and that is used for the resource selection process in LTE, so that the LTE-V2X PHY layer performs resource selection (which may also be referred to as performing LTE sensing). For details, refer to the foregoing resource selection procedure in the mode 2 in LTE.

In a process in which the LTE-V2X PHY layer performs LTE sensing, the first terminal device may receive, through the LTE-V2X PHY layer, and decode the first sidelink control information. After decoding the first sidelink control information, the LTE-V2X PHY layer of the first terminal device obtains a parameter in the first sidelink control information, for example, the first priority and related information of the first time-frequency resource indicated by the first sidelink control information, and determines the RSRP measurement value of the first time-frequency resource.

(3) The LTE-V2X PHY layer sends an LTE sensing result to the NR-V2X PHY layer, where the sensing result includes information such as some or all parameters in the first sidelink control information, the RSRP measurement value of the first time-frequency resource, and the RSSI of the first time-frequency resource, and the LTE sensing result is used by the NR-V2X PHY layer to determine the first resource set based on the information.

For the NR-V2X PHY layer, after receiving the parameter that is sent from the NR-V2X MAC layer and that is used for the resource selection process in NR, the NR-V2X PHY layer performs the resource selection procedure in the mode 2 in NR.

The first terminal device may receive, through the NR-V2X PHY layer, the second sidelink control information, and decode the second sidelink control information. After decoding the second sidelink control information, the NR-V2X PHY layer of the first terminal device obtains a parameter in the second sidelink control information, for example, the second priority, related information of the second time-frequency resource indicated by the second sidelink control information, and the RSRP measurement value of the second time-frequency resource. The NR-V2X PHY layer determines the third resource set based on the information.

(4) After determining the first resource set and the third resource set, the NR-V2X PHY layer reports the intersection set of the first resource set and the third resource set to the NR-V2X MAC layer.

When the ratio of the quantity of resources in the intersection set of the first resource set and the third resource set to the quantity of resources in the resource pool is less than the first threshold, the NR-V2X PHY layer may determine the first candidate resource set, where the first candidate resource set includes the intersection set, and includes the at least one resource in the difference set of the first resource set relative to the intersection set. For a specific manner of determining the first candidate resource set, refer to the descriptions in the embodiment of FIG. 9.

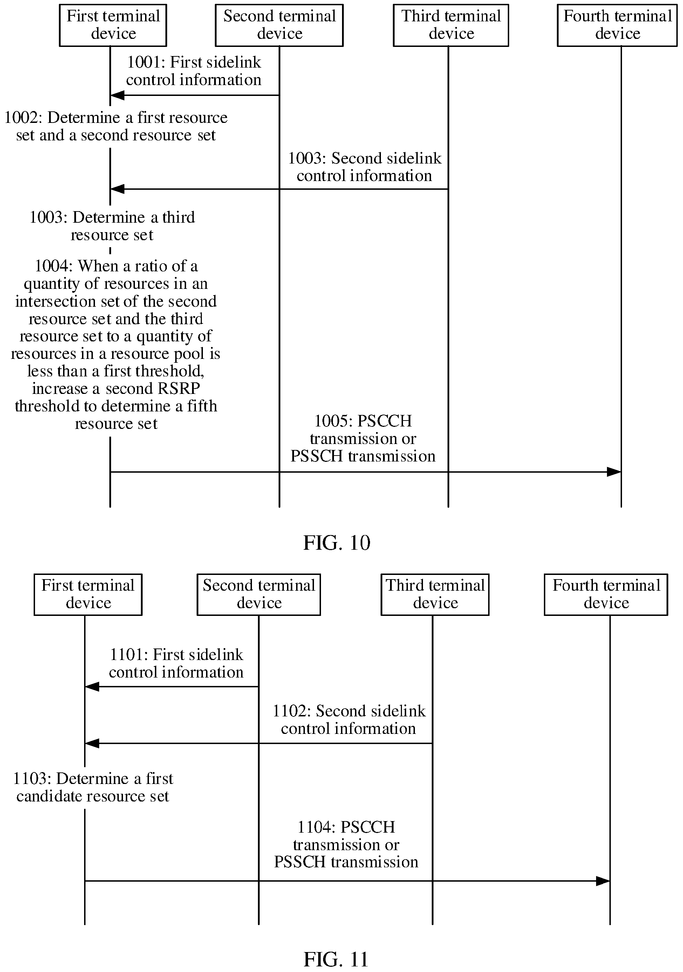

FIG. 10 is a flowchart of still another resource selection method according to an embodiment of this application. Refer to FIG. 10. The resource selection method provided in this embodiment of this application may be performed by a first terminal device. The method includes the following steps.

1001: The first terminal device receives first sidelink control information from a second terminal device, where the first sidelink control information indicates a first priority, and the first priority is used to determine a first reference signal received power RSRP threshold; and determines a first resource set from a first resource pool based on the first RSRP threshold.

The first terminal device is a terminal device that supports both LTE communication and NR communication, and the second terminal device is a terminal device that supports at least LTE communication.

In an optional implementation, the first sidelink control information is information in an evolved universal terrestrial radio access E-UTRA technology. In other words, the first sidelink control information may be information used for LTE communication.

In this embodiment of this application, for the first resource pool, the first sidelink control information, the first priority indicated by the first sidelink control information, a specific manner of determining the first RSRP threshold based on the first priority, and a specific manner of determining the first resource set from the resource pool based on the first sidelink control information, refer to step 801. Details are not described herein again.

1002: The first terminal device determines a second resource set from the first resource set based on a received signal strength indicator RSSI of each resource in the first resource set.

For the resource selection process in the mode 2 in LTE, after the first resource set is determined, the first terminal device sequentially moves a resource with a smallest RSSI from the first resource set to the second resource set based on a value of the RSSI of each resource in the first resource set, until a percentage of a quantity of resources in the second resource set to a quantity of resources in the resource pool is greater than or equal to a second threshold.

In this embodiment of this application, for a specific process of determining the second resource set from the first resource set, refer to step 802. Details are not described herein again.

1003: The first terminal device receives second sidelink control information from a third terminal device, where the second sidelink control information indicates a second priority, and the second priority is used to determine a second RSRP threshold; and determines a third resource set from a second resource pool based on the second RSRP threshold. In an optional implementation, the second sidelink control information is information in a new radio NR technology. In other words, the second sidelink control information may be information used for NR communication.

The third terminal device is a terminal device that supports at least NR communication. Alternatively, the third terminal device may be the foregoing second terminal device, and in this case, the second terminal device is a device that supports both NR communication and LTE communication.

In this embodiment of this application, for the second resource pool, the second sidelink control information, the second priority indicated by the second sidelink control information, a specific manner of determining the second RSRP threshold based on the second priority, and a specific manner of determining the third resource set from the resource pool based on the second sidelink control information, refer to step 803. Details are not described herein again.

It should be noted that a sequence between step 1001 and step 1003 is not limited in this embodiment of this application. The first terminal device may first receive the first sidelink control information and then receive the second sidelink control information, or may first receive the second sidelink control information and then receive the first sidelink control information, or may simultaneously receive the first sidelink control information and the second sidelink control information.

1004: When a ratio of a quantity of resources in an intersection set of the second resource set and the third resource set to a quantity of resources in the resource pool is less than a first threshold, the first terminal device increases the second RSRP threshold to obtain a third RSRP threshold, and redetermines the third resource set based on the third RSRP threshold to obtain a fifth resource set.

The first threshold may be X%, and a value of X may be any value ranging from 1 to 100. The first threshold may be configured by a network device, or (pre-)configured, or predefined. For example, the value of X may be any one of 20, 35, or 50.

Refer to the embodiment of FIG. 8. It is assumed that:

first resource set: {time-frequency resource 1 to time-frequency resource 6, time-frequency resource 11 to time-frequency resource 20};
second resource set: {time-frequency resource 1, time-frequency resource 4, time-frequency resource 5, time-frequency resource 12}; and
third resource set: {time-frequency resources 1 to 3, time-frequency resource 6, time-frequency resource 8, time-frequency resource 10, time-frequency resource 12 to time-frequency resource 20}.

The intersection set of the second resource set and the third resource set is the time-frequency resource 1. The ratio of the quantity of resources in the intersection set to the quantity of resources in the resource pool is 5%, and 5% is compared with X%. If 5% is less than X%, the terminal device increases the second RSRP threshold, and redetermines the third resource set based on the third RSRP threshold.

In an example, in a process of initially determining the third resource set, the first terminal device determines the second RSRP threshold according to step 3 in the resource selection in the mode 2 by using the second priority indicated by the second sidelink control information. When an RSRP value of a second time-frequency resource indicated by the second sidelink control information is greater than the second RSRP threshold, the first terminal device excludes the second time-frequency resource from the resource pool. If the second RSRP threshold is increased, the second time-frequency resource excluded in the foregoing process may not be excluded. For example, the RSRP value of the second time-frequency resource indicated by the second sidelink control information is greater than the initial second RSRP threshold, but may be less than or equal to the third RSRP threshold. In this case, the second time-frequency resource is not excluded, but is moved to the third resource set to obtain the fifth resource set.

It may be understood that the second RSRP threshold is increased, so that the third resource set is redetermined, to obtain the fifth resource set. A quantity of resources in the fifth resource set is greater than or equal to a quantity of resources in the third resource set.

For example, the fifth resource set may be:
{time-frequency resources 1 to 3, time-frequency resource 5, time-frequency resource 6, time-frequency resource 8, time-frequency resource 10 to time-frequency resource 20}.

After the third resource set is redetermined, optionally, the method further includes the following steps.

1005: The first terminal device may select a time-frequency resource from an intersection set of the second resource set and the fifth resource set, where the time-frequency resource is used for PSCCH transmission and/or PSSCH transmission, and the PSCCH transmission may be sending sidelink control information to a fourth terminal device, and the PSSCH transmission may be sending sidelink data to the fourth terminal device.

Optionally, the fourth terminal device is a terminal device that supports at least NR communication, the sidelink control information sent to a fourth sidelink device may be sidelink control information in NR communication, and the sidelink data may be sidelink data in NR communication.

Optionally, the first terminal device may determine whether a quantity of resources in the intersection set of the fifth resource set and the second resource set exceeds a third threshold. When the quantity of resources in the intersection set of the fifth resource set and the second resource set exceeds the third threshold, the intersection set of the second resource set and the third resource set is reported to a higher layer of the first terminal device, and the first terminal device selects a resource from the intersection set to send information.

Optionally, the third threshold is less than or equal to the first threshold, and the third threshold may be (pre-)configured by the resource pool.

For example, the intersection set between the redetermined third resource set and the second resource set is {time-frequency resource 1, time-frequency resource 5, time-frequency resource 12}. The quantity of resources in the intersection set is 3, and a ratio of the quantity of resources in the intersection set to the quantity of resources in the second resource pool is 15%. If 15% is greater than or equal to the third threshold, a resource is selected from the intersection set to send information.

Optionally, after the second RSRP threshold is increased once, if the ratio of the quantity of resources in the intersection set of the redetermined third resource set and the second resource set to the quantity of resources in the second resource pool is still less than the third threshold, the second RSRP threshold may be increased for a plurality of times.

Optionally, the second RSRP threshold may be increased by Y dB, where Y is a value greater than 0.

Optionally, if the second RSRP threshold is increased for a plurality of times, an increase amplitude may be different each time. For example, the second RSRP threshold is increased by 3 dB for the 1st time, and may be increased by 6 dB for the 2nd time. After the second RSRP threshold is increased twice, a difference between the third RSRP threshold and the second RSRP threshold is 9 dB.

In an optional implementation, when the quantity of resources in the intersection set of the fifth resource set and the second resource set cannot be greater than or equal to the third threshold by increasing the second RSRP threshold for one or more times, the first terminal device may select a time-frequency resource from an intersection set of the fifth resource set and the first resource set, where the selected time-frequency resource is used for PSCCH transmission and/or PSSCH transmission.

In an optional implementation, when the quantity of resources in the intersection set of the fifth resource set and the second resource set cannot be greater than or equal to the third threshold by increasing the second RSRP threshold for one or more times, the first terminal device may select a resource from the first resource set and add the resource to the intersection set of the fifth resource set and the second resource set. Optionally, for a manner of selecting a resource from the first resource set and add the resource to the intersection set, refer to the embodiment of FIG. 8.

In an optional implementation, the first RSRP threshold may be further increased to obtain a fourth RSRP threshold, and the first resource set is redetermined based on the fourth RSRP threshold to obtain a sixth resource set.

For a manner of increasing the first RSRP threshold, refer to the foregoing manner of increasing the second RSRP threshold. After the fourth RSRP threshold is obtained, if an RSRP value of a first time-frequency resource indicated by the first sidelink control information is greater than the fourth RSRP threshold, the first time-frequency resource is excluded from the resource pool; or if the first RSRP threshold is less than or equal to the fourth RSRP threshold, the first time-frequency resource is not excluded from the resource pool.

It may be understood that a quantity of resources in the sixth resource set is greater than or equal to that in the first resource set, and the sixth resource set includes the first resource set. When the quantity of resources in the intersection set of the fifth resource set and the second resource set cannot be greater than or equal to the third threshold by increasing the second RSRP threshold for one or more times, the first terminal device may select a time-frequency resource from an intersection set of the sixth resource set and the third resource set, where the selected time-frequency resource is used for PSCCH transmission and/or PSSCH transmission. Alternatively, when the quantity of resources in the intersection set of the fifth resource set and the second resource set cannot be greater than or equal to the third threshold by increasing the second RSRP threshold for one or more times, the first terminal device may select a time-frequency resource from an intersection set of the sixth resource set and the fifth resource set, where the selected time-frequency resource is used for PSCCH transmission and/or PSSCH transmission.

The first terminal device in the embodiment of FIG. 10 in this application may be the NR-V2X device shown in FIG. 7(a), the NR-V2X device shown in FIG. 7(b), or another device that can support both LTE communication and NR communication. The following uses the NR-V2X device shown in FIG. 7(b) as an example to describe an optional implementation in which the NR-V2X device performs resource selection according to the foregoing method.

For the first terminal device in this embodiment of this application, in a process of determining a resource by using a resource allocation procedure in the mode 2, the first terminal device may separately perform the resource selection process in the mode 2 in LTE and the resource selection process in the mode 2 in NR, obtain an intersection set of resource sets determined in the two procedures, and select a resource from the intersection set to send information.

Refer to FIG. 7(a).

(1) In the foregoing process, the first terminal device in this embodiment of this application may request, through the NR-V2X MAC layer, the LTE-V2X PHY layer to determine the candidate resource set. Specifically, the NR-V2X MAC layer sends one or more of the following parameters to the LTE-V2X PHY layer:

information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsvp-TX}$), indication information of a resource selection mechanism (for example, indicating only full sensing, only partial sensing, only random resource selection, or a combination thereof). The foregoing parameters are parameters used in the resource selection process in LTE.

Optionally, the NR-V2X MAC layer may send the one or more parameters to the LTE-V2X PHY layer based on first information, where the first information may be configuration information.

(2) The LTE-V2X PHY layer performs resource selection (which may also be referred to as performing LTE sensing) based on the received parameter. For details, refer to the foregoing resource selection procedure in the mode 2 in LTE.

In a process in which the LTE-V2X PHY layer performs LTE sensing, the first terminal device may receive, through the LTE-V2X PHY layer, and decode the first sidelink control information. After decoding the first sidelink control information, the LTE-V2X PHY layer of the terminal device obtains a parameter in the first sidelink control information, for example, the first priority and related information of the first sidelink resource indicated by the first sidelink control information.

The LTE-V2X PHY layer determines the first resource set and the second resource set based on the obtained parameter, and reports the second resource set to the NR-V2X MAC layer.

(3) The NR-V2X MAC layer requests the NR-V2X PHY layer to determine the candidate resource set. Specifically, the NR-V2X MAC layer sends one or more of the following parameters to the LTE-V2X PHY layer: information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsvp\text{-}TX}$), indication information of a resource selection mechanism (for example, indicating only full sensing, only partial sensing, only random resource selection, or a combination thereof). The foregoing parameters are parameters used in the resource selection process in NR.

Optionally, the NR-V2X MAC layer may send the one or more parameters to the LTE-V2X PHY layer by using second information, where the second information may be configuration information.

(4) The NR-V2X PHY layer performs resource selection (which may also be referred to as performing NR sensing) based on the received parameters. For details, refer to the foregoing resource selection procedure in the mode 2 in NR.

In a process in which the NR-V2X PHY layer performs NR sensing, the first terminal device may receive, through the NR-V2X PHY layer, and decode the second sidelink control information. After decoding the second sidelink control information, the LTE-V2X PHY layer of the terminal device obtains a parameter in the second sidelink control information, for example, the second priority and related information of the second sidelink resource indicated by the second sidelink control information.

The NR-V2X PHY layer determines the third resource set based on the obtained parameter, and reports the third resource set to the NR-V2X MAC layer.

The NR-V2X MAC layer is used to select a resource from the intersection set of the second resource set and the third resource set.

When the ratio of the quantity of resources in the intersection set of the second resource set and the third resource set to the quantity of resources in the resource pool is less than the first threshold, the NR-V2X MAC layer sends indication information to the NR-V2X PHY layer, to trigger the NR-V2X PHY layer to increase the second RSRP threshold to redetermine the third resource set. The NR-V2X PHY layer increases the second RSRP threshold based on the indication information to obtain the third RSRP threshold, and determines the fifth resource set based on the third RSRP threshold. The NR-V2X PHY layer reports the fifth resource set to the NR-V2X MAC layer. The NR-V2X MAC layer selects a time-frequency resource from the intersection set of the second resource set and the fifth resource set, where the selected time-frequency resource is used for PSCCH transmission and/or PSSCH transmission.

It should be noted that a sequence between step (1) and step (3) is not limited in this embodiment of this application. Step (1) and step (3) may be simultaneously performed, or step (1) is performed before step (3), or step (3) is performed before step (1).

Refer to FIG. 7(b).

(1) In the foregoing process, the first terminal device in this embodiment of this application may first request, through the NR-V2X MAC layer, the NR-V2X PHY layer to determine the candidate resource set. Specifically, the NR-V2X MAC layer sends one or more of the following parameters to the NR-V2X PHY layer: information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsvp\_TX}$), indication information of a resource selection mechanism (for example, indicating only full sensing, only partial sensing, only random resource selection, or a combination thereof).

The parameter may include a parameter used in the resource selection process in LTE and a parameter used in the resource selection process in NR.

Optionally, the NR-V2X MAC layer may send the one or more parameters to the NR-V2X PHY layer based on first information, where the first information may be configuration information.

(2) The NR-V2X PHY layer sends, to the LTE-V2X PHY layer, the parameter that is in the foregoing received parameters and that is used for the resource selection process in LTE, so that the LTE-V2X PHY layer performs resource selection (which may also be referred to as performing LTE sensing). For details, refer to the foregoing resource selection procedure in the mode 2 in LTE.

In a process in which the LTE-V2X PHY layer performs LTE sensing, the first terminal device may receive, through the LTE-V2X PHY layer, and decode the first sidelink control information. After decoding the first sidelink control information, the LTE-V2X PHY layer of the first terminal device obtains a parameter in the first sidelink control information, for example, the first priority and related information of the first time-frequency resource indicated by the first sidelink control information, and determines the RSRP measurement value of the first time-frequency resource.

(3) The LTE-V2X PHY layer sends an LTE sensing result to the NR-V2X PHY layer, where the sensing result includes information such as some or all parameters in the first sidelink control information, the RSRP measurement value of the first time-frequency resource, and the RSSI of the first time-frequency resource, and the LTE sensing result is used by the NR-V2X PHY layer to determine the first resource set and the second resource set based on the information.

For the NR-V2X PHY layer, after receiving the parameter that is sent from the NR-V2X MAC layer and that is used for the resource selection process in NR, the NR-V2X PHY layer performs the resource selection procedure in the mode 2 in NR.

The first terminal device may receive, through the NR-V2X PHY layer, the second sidelink control information, and decode the second sidelink control information. After decoding the second sidelink control information, the NR-V2X PHY layer of the first terminal device obtains a parameter in the second sidelink control information, for example, the second priority, related information of the second time-frequency resource indicated by the second sidelink control information, and the RSRP measurement value of the second time-frequency resource. The NR-V2X PHY layer determines the third resource set based on the information.

(4) After determining the first resource set, the second resource set, and the third resource set, the NR-V2X PHY layer reports the intersection set of the second resource set and the third resource set to the NR-V2X MAC layer.

When the ratio of the quantity of resources in the intersection set of the second resource set and the third resource set to the quantity of resources in the second resource pool is less than the first threshold, the NR-V2X PHY layer may increase the second RSRP threshold to redetermine the third resource set to obtain the fifth resource set, and the terminal device may select a resource from the intersection set of the second resource set and the fifth resource set to send information. For a specific manner of increasing the second RSRP threshold to redetermine the third resource set, refer to the descriptions of the embodiment of FIG. 10.

FIG. 11 is a flowchart of yet another resource selection method according to an embodiment of this application. Refer to FIG. 11. The resource selection method provided in this embodiment of this application may be performed by a first terminal device. The method includes the following steps.

1101: The first terminal device receives first sidelink control information from a second terminal device, where the first sidelink control information indicates a first priority and a first time-frequency resource, and the first priority is used to determine a first reference signal received power RSRP threshold.

In an optional implementation, the first sidelink control information is information in an evolved universal terrestrial radio access E-UTRA technology. In other words, the first sidelink control information may be information used for LTE communication.

The first terminal device is a terminal device that supports both LTE communication and NR communication, and the second terminal device is a terminal device that supports at least LTE communication.

For the resource pool in this embodiment of this application, refer to the descriptions of the LTE-V2X resource pool and the NR-V2X resource pool in the foregoing embodiment. Optionally, in this embodiment of this application, LTE-V2X and NR-V2X share a resource pool. In other words, a resource pool is configured by a network device for the terminal device, or a resource pool is (pre-)configured; and the resource pool may be used to select a resource for LTE communication, or may be used to select a resource for NR communication.

Before the first terminal device receives the first sidelink control information, the method may further include: The first terminal device determines a resource selection window and a resource sensing window. For details, refer to the steps in the resource selection in the mode 2.

After receiving the first sidelink control information, the first terminal device decodes the first sidelink control information, to obtain a parameter in the first sidelink control information. The parameter may include priority information (for example, a first priority) and a time-frequency resource (a first time-frequency resource) indicated by the first sidelink control information. The terminal device determines the first RSRP threshold according to step 3 in the resource selection in the mode 2 by using the first priority indicated by the first sidelink control information.

The method may further include: using a resource in the resource pool as an initialized candidate resource set, and excluding a time-frequency resource (if any) that is not sensed from the resource pool.

Optionally, the first terminal device performs RSRP measurement based on the first sidelink control information. For a specific process, refer to step 6 in the resource selection in the mode 2.

1102: The first terminal device receives second sidelink control information from a third terminal device, where the second sidelink control information indicates a second priority and a second time-frequency resource, and the second priority is used to determine a second reference signal received power RSRP threshold.

The third terminal device is a terminal device that supports at least NR communication. Alternatively, the third terminal device may be the foregoing second terminal device, and in this case, the second terminal device is a device that supports both NR communication and LTE communication.

In an optional implementation, the second sidelink control information is information in a new radio NR technology. In other words, the second sidelink control information may be information used for NR communication.

The second sidelink control information indicates a second priority and a second time-frequency resource. The terminal device determines the second RSRP threshold according to step 3 in the resource selection in the mode 2 by using the second priority indicated by the second sidelink control information. The terminal device performs RSRP measurement based on the second sidelink control information. For a specific process, refer to step 6 in the resource selection in the mode 2.

1103: The first terminal device determines a first candidate resource set based on the first RSRP threshold and the second RSRP threshold, where the first terminal device selects a time-frequency resource from the first candidate resource set, and the time-frequency resource is used for PSSCH transmission and/or PSCCH transmission. The PSCCH transmission may be sending sidelink control information to a fourth terminal device, and the PSSCH transmission may be sending sidelink data to the fourth terminal device.

Optionally, for the resource pool in this embodiment of this application, refer to the descriptions of the LTE-V2X resource pool and the NR-V2X resource pool in the foregoing embodiment. Optionally, in this embodiment of this application, LTE-V2X and NR-V2X share a resource pool. In other words, a resource pool is configured by a network device for the terminal device, or a resource pool is (pre-)configured; and the resource pool may be used to select a resource for LTE communication, or may be used to select a resource for NR communication.

Optionally, the fourth terminal device is a terminal device that supports at least NR communication, the sidelink control information sent to a fourth sidelink device may be sidelink control information in NR communication, and the sidelink data may be sidelink data in NR communication.

In an optional implementation, when an RSRP measurement value of the first time-frequency resource is greater than the first RSRP threshold, the first terminal device excludes the first time-frequency resource from the resource pool; or when an RSRP measurement value of the first time-frequency resource is less than or equal to the first RSRP threshold, the first time-frequency resource is reserved. When an RSRP measurement value of the second time-frequency resource is greater than the second RSRP threshold, the first terminal device excludes the second time-frequency resource from the resource pool; or when an RSRP measurement value of the second time-frequency resource is less than or equal to the second RSRP threshold, the second time-frequency resource is reserved. The first terminal device excludes/reserves the first time-frequency resource and/or the second time-frequency resource based on the first RSRP threshold and the second RSRP threshold, to obtain a candidate resource set.

In an example, there are a total of 10 time-frequency resources in the resource pool: a time-frequency resource 1 to a time-frequency resource 10. The first sidelink control information indicates the time-frequency resource 1, and the second sidelink control information indicates the time-frequency resource 4.

The first RSRP threshold and an RSRP measurement value of the time-frequency resource 1 are determined based on the first sidelink control information. When the RSRP measurement value of the time-frequency resource 1 is greater than the first RSRP threshold, the time-frequency resource 1 is excluded from the resource pool.

The second RSRP threshold and an RSRP measurement value of the time-frequency resource 4 are determined based on the second sidelink control information. When the RSRP measurement value of the time-frequency resource 4 is less than or equal to the first RSRP threshold, the time-frequency resource 4 does not need to be excluded from the resource pool.

In this case, a candidate resource set {time-frequency resource 2 to time-frequency resource 10} is obtained.

In an optional implementation, the first sidelink control information and the second sidelink control information may indicate a same time-frequency resource, that is, the first time-frequency resource is the same as the second time-frequency resource. That the time-frequency resources are the same means that time domain positions of the time-frequency resources are the same, and frequency domain positions of the time-frequency resources are the same.

When the first time-frequency resource is the same as the second time-frequency resource, the first terminal device determines, based on first received sidelink control information, whether to exclude the time-frequency resource from the resource pool.

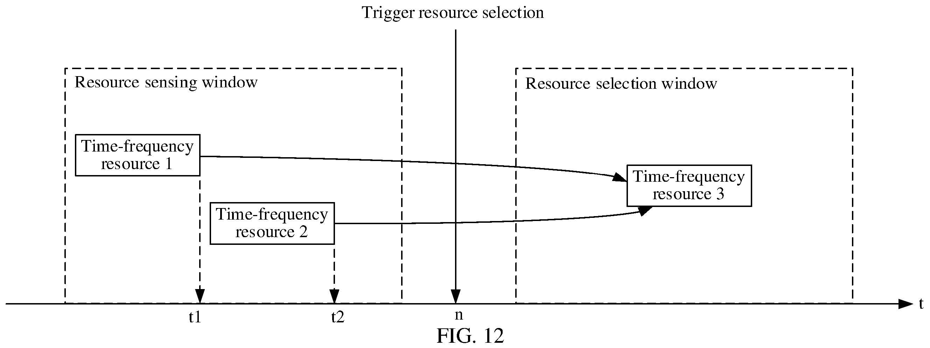

FIG. 12 is a diagram of a resource selection method according to an embodiment of this application. Refer to FIG. 12. A first terminal device receives first sidelink control information at a moment t1 in a resource sensing window, and receives second sidelink control information at a moment t2, where the first sidelink control information indicates a first time-frequency resource (time-frequency resource 3), and the second sidelink control information indicates a second time-frequency resource (time-frequency resource 3). In this case, the first sidelink control information and the second sidelink control information indicate a same time-frequency resource.

Because the moment at which the first terminal device receives the first sidelink control information is earlier than the moment at which the first terminal device receives the second sidelink control information, the first terminal device determines a first RSRP threshold based on the first sidelink control information, and determines an RSRP measurement value of the time-frequency resource 3. When the RSRP measurement value of the time-frequency resource 3 is greater than the first RSRP threshold, the first terminal device excludes the time-frequency resource 3 from a resource pool. After the first terminal device receives the second sidelink control information and decodes the second sidelink control information, the second sidelink control information also indicates the time-frequency resource 3, and the first terminal device does not need to determine again whether to exclude the time-frequency resource 3.

In an optional implementation, if a ratio of a quantity of resources in a candidate resource set to a quantity of resources in the resource pool is less than a first threshold, the first terminal device may increase the first RSRP threshold and/or the second RSRP threshold, to redetermine the candidate resource set, until the ratio of the quantity of resources in the candidate resource set to the quantity of resources in the resource pool is greater than or equal to a third threshold, to obtain a second candidate resource set. Each time when the RSRP threshold is increased, the first RSRP threshold and/or the second RSRP threshold may be increased by 3 dB, and the first RSRP threshold and/or the second RSRP threshold may be increased for a plurality of times. The third threshold is less than or equal to the first threshold. The third threshold may be configured by the resource pool, preconfigured, predefined, or indicated by a network device.

Optionally, after the second candidate resource set is determined, the method further includes the following steps.

1104: Select a time-frequency resource from the second candidate resource set, and send information to a fourth terminal device on the time-frequency resource.

The first terminal device in the embodiment of FIG. 11 in this application may be the NR-V2X device shown in FIG. 7(a), the NR-V2X device shown in FIG. 7(b), or another device that can support both LTE communication and NR communication. The following uses the NR-V2X device shown in FIG. 7(b) as an example to describe an optional implementation in which the NR-V2X device performs resource selection according to the foregoing method.

For the NR-V2X device that supports both LTE communication and NR communication in this embodiment of this application, in a process of determining a resource by using a resource allocation procedure in the mode 2, the NR-V2X device may separately perform the resource selection process in the mode 2 in LTE and the resource selection process in the mode 2 in NR, obtain an intersection set of resource sets determined in the two procedures, and select a resource from the intersection set to send information.

Refer to FIG. 7(b).

(1) In the foregoing process, the first terminal device in this embodiment of this application may first request, through the NR-V2X MAC layer, the NR-V2X PHY layer to determine the candidate resource set. Specifically, the NR-V2X MAC layer sends one or more of the following parameters to the NR-V2X PHY layer:

information about a resource pool to which a resource set that needs to be reported belongs, priority information (L1 priority, $prio_{TX}$), a remaining data packet delay budget, a quantity $L_{subCH}$ of sub-channels used for PSSCH/PSCCH transmission in one slot, a resource reservation interval ($P_{rsv\_TX}$), indication information of a resource selection mechanism (for example, indicating only full sensing, only partial sensing, only random resource selection, or a combination thereof).

The parameter may include a parameter used in the resource selection process in LTE and a parameter used in the resource selection process in NR.

Optionally, the NR-V2X MAC layer may send the one or more parameters to the NR-V2X PHY layer based on first information, where the first information may be configuration information.

(2) The NR-V2X PHY layer sends, to the LTE-V2X PHY layer, the parameter that is in the foregoing received parameters and that is used for the resource selection process in LTE, so that the LTE-V2X PHY layer performs resource selection (which may also be referred to as performing LTE sensing). For details, refer to the foregoing resource selection procedure in the mode 2 in LTE.

In a process in which the LTE-V2X PHY layer performs LTE sensing, the first terminal device may receive, through the LTE-V2X PHY layer, and decode the first sidelink control information. After decoding the first sidelink control information, the LTE-V2X PHY layer of the first terminal device obtains a parameter in the first sidelink control information, for example, the first priority, related information of the first time-frequency resource indicated by the first sidelink control information, and the RSRP measurement value of the first time-frequency resource.

(3) The LTE-V2X PHY layer sends an LTE sensing result to the NR-V2X PHY layer, where the sensing result includes one or more of the following information: information such as the parameter in the first sidelink control information and the RSRP measurement value of the first time-frequency resource.

For the NR-V2X PHY layer, after receiving the parameter that is sent from the NR-V2X MAC layer and that is used for the resource selection process in NR, the NR-V2X PHY layer performs the resource selection procedure in the mode 2 in NR.

The first terminal device may receive, through the NR-V2X PHY layer, the second sidelink control information, and decode the second sidelink control information. After decoding the second sidelink control information, the NR-V2X PHY layer of the first terminal device obtains a parameter in the second sidelink control information, for example, the second priority and related information of the second sidelink resource indicated by the second sidelink control information. The NR-V2X PHY layer determines the RSRP measurement value of the second time-frequency resource, and determines the second RSRP threshold based on the second priority.

(4) The NR-V2X PHY layer determines, based on the first RSRP threshold and the RSRP measurement value of the first time-frequency resource, whether to exclude the first time-frequency resource from the resource pool, and determines, based on the second RSRP threshold and the RSRP measurement value of the second time-frequency resource, whether to exclude the second time-frequency resource from the resource pool.

The NR-V2X PHY layer reports the determined candidate resource set to the NR-V2X MAC layer, and the NR-V2X MAC layer selects a time-frequency resource from the candidate resource set, where the time-frequency resource is used for PSCCH transmission and/or PSSCH transmission.

When the ratio of the quantity of resources in the candidate resource set to the quantity of resources in the resource pool is less than the first threshold, the NR-V2X PHY layer may increase the first RSRP threshold and/or the second RSRP threshold, to redetermine the candidate resource set, until the ratio of the quantity of resources in the candidate resource set to the quantity of resources in the resource pool is greater than or equal to the third threshold, to obtain the second candidate resource set. For a specific manner of increasing the first RSRP threshold and/or the second RSRP threshold, refer to the descriptions of the embodiment of FIG. 11.

It should be noted that embodiments of this application may be combined with each other when the technical solutions do not conflict.

It may be understood that in the foregoing embodiments, methods and/or steps implemented by the first terminal device may alternatively be implemented by a component (for example, a chip or a circuit) that can be used in the first terminal device.

The foregoing mainly describes the solutions provided in embodiments of this application from the perspective of interaction between devices. Correspondingly, an embodiment of this application further provides a communication apparatus, and the communication apparatus is configured to implement the foregoing methods. The communication apparatus may be the first terminal device in the foregoing method embodiments, or an apparatus including the first terminal device, or a component that can be used in the first terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

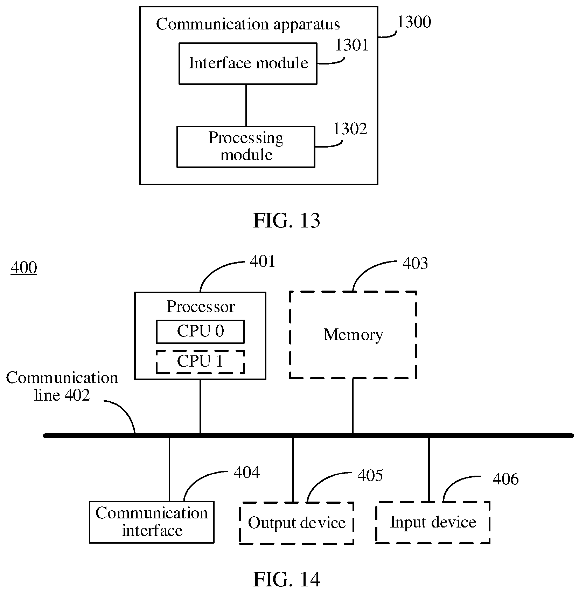

For example, the communication apparatus is the first terminal device in the foregoing method embodiments. FIG. 13 is a diagram of a structure of a communication apparatus 1300. The communication apparatus 1300 includes an interface module 1301 and a processing module 1302. The interface module 1301 may alternatively be referred to as a transceiver module or a transceiver unit. The interface module 1301 is configured to implement a transceiver function. For example, the interface module may be a transceiver circuit, a transceiver machine, a transceiver, or a communication interface. The interface module 1301 may also include a receiving module/unit and a sending module/unit.

When the communication apparatus 1300 is configured to implement the method shown in FIG. 8 in embodiments of this application, the interface module 1301 is configured to receive first sidelink control information from a second terminal device, where the first sidelink control information is used to determine a first resource set from a first resource pool.

The processing module 1302 is configured to determine a second resource set from the first resource set based on a received signal strength indicator RSSI of at least one time-frequency resource in the first resource set.

The interface module 1301 is configured to receive second sidelink control information from a third terminal device, where the second sidelink control information is used to determine a third resource set from a second resource pool.

When a ratio of a quantity of resources in an intersection set between the second resource set and the third resource set to a quantity of resources in the resource pool is less than a first threshold, the processing module 1302 is configured to determine a first candidate resource set, where the first candidate resource set includes the intersection set, and includes at least one resource in a difference set of the first resource set relative to the intersection set.

The processing module 1302 is configured to select a time-frequency resource from the first candidate resource set, where the selected time-frequency resource is used for PSSCH transmission and/or PSCCH transmission.

When the communication apparatus 1300 is configured to implement the method shown in FIG. 9 in embodiments of this application, the interface module 1301 is configured to receive first sidelink control information from a second terminal device, where the first sidelink control information is used to determine a first resource set from a first resource pool.

The interface module 1301 is configured to receive second sidelink control information from a third terminal device, where the second sidelink control information is used to determine a third resource set from a second resource pool.

The processing module 1302 is configured to determine a first candidate resource set when a ratio of a quantity of resources in an intersection set of the first resource set and the third resource set to a quantity of resources in the second resource pool is less than a first threshold, the first candidate resource set includes the intersection set, and includes at least one resource in a difference set of the first resource set relative to the intersection set.

When the communication apparatus 1300 is configured to implement the method shown in FIG. 10 in embodiments of this application, the interface module 1301 is configured to receive first sidelink control information from a second terminal device, where the first sidelink control information indicates a first priority, and the first priority is used to determine a first reference signal received power RSRP threshold; and determine a first resource set from a resource pool based on the first RSRP threshold.

The processing module 1302 is configured to determine a second resource set from the first resource set based on a received signal strength indicator RSSI of at least one resource in the first resource set.

The interface module 1301 is configured to receive second sidelink control information from a third terminal device, where the second sidelink control information indicates a second priority, and the second priority is used to determine a second RSRP threshold; and determine a third resource set from a resource pool based on the second RSRP threshold. The processing module 1302 is configured to: when a ratio of a quantity of resources in an intersection set of the second resource set and the third resource set to a quantity of resources in the resource pool is less than a first threshold, increase, by the first terminal device, the second RSRP threshold to obtain a third RSRP threshold, and redetermine the third resource set based on the third RSRP threshold to obtain a fifth resource set.

When the communication apparatus 1300 is configured to implement the method shown in FIG. 11 in embodiments of this application, the interface module 1301 is configured to receive first sidelink control information from a second terminal device, where the first sidelink control information indicates a first priority and a first time-frequency resource, and the first priority is used to determine a first reference signal received power RSRP threshold.

The interface module 1301 is configured to receive second sidelink control information from a third terminal device, where the second sidelink control information indicates a second priority and a second time-frequency resource, and the second priority is used to determine a second reference signal received power RSRP threshold.

The processing module 1302 is configured to determine, based on the first RSRP threshold and the second RSRP threshold, whether to exclude the first time-frequency resource and/or the second time-frequency resource from a resource pool, to determine a candidate resource set, where the first terminal device selects a time-frequency resource from the candidate resource set, and the time-frequency resource is used for PSSCH transmission and/or PSCCH transmission.

In this embodiment, the communication apparatus 1300 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1300 may be in a form of the communication apparatus 400 shown in FIG. 14.

For example, the processor 401 in the terminal device shown in FIG. 14 may invoke the computer-executable instructions stored in the memory 403, to enable the communication apparatus 400 to perform the resource reservation method in the foregoing method embodiments. Specifically, functions/implementation processes of the interface module 1301 and the processing module 1302 in FIG. 13 may be implemented by the processor 401 in the communication apparatus 400 shown in FIG. 14 by invoking the computer-executable instructions stored in the memory 403. Alternatively, a function/an implementation process of the processing module 1302 in FIG. 13 may be implemented by the processor 401 in the terminal device shown in FIG. 4(a) and FIG. 4(b) by invoking the computer-executable instructions stored in the memory 403. A function/an implementation process of the interface module 1301 in FIG. 13 may be implemented through the communication interface 404 in the communication apparatus 400 shown in FIG. 14.

The communication apparatus 1300 provided in this embodiment may perform the resource selection method. Therefore, for technical effects that can be achieved by the communication apparatus, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing modules or units are implemented by hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete component. The hardware may perform the foregoing method procedure by running run necessary software or independently of software.

Optionally, an embodiment of this application further provides a chip system, including: at least one processor and an interface, where the at least one processor is coupled to a memory by using an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in this embodiment of this application.

Optionally, an embodiment of this application further provides a communication system, including any one or more of the first terminal device, the second terminal device, the third terminal device, and the fourth terminal device in the foregoing method embodiments.

All or some of the foregoing embodiments may be implemented by software, hardware, firmware, or any combination thereof. When a software program is used to implement embodiments, all or some of embodiments may be implemented in a form of a computer program product.

This application provides a computer program product, including one or more computer instructions. When the computer instructions are run on a communication apparatus, any method in embodiments of this application is performed.

When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), or a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the accompanying claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

**Claims**

**1.** A resource selection method, comprising:

receiving first sidelink control information, wherein the first sidelink control information is used to determine a first resource set from a first resource pool; and determining a second resource set from the first resource set based on a received signal strength indicator RSSI of at least one resource in the first resource set;

receiving second sidelink control information, wherein the second sidelink control information is used to determine a third resource set from a second resource pool;

determining a first candidate resource set, wherein when a ratio of a quantity of resources in an intersection set of the second resource set and the third resource set to a quantity of resources in the second resource pool is less than a first threshold, the first candidate resource set comprises the intersection set, and the first candidate resource set further comprises at least one resource in a difference set of the first resource set relative to the intersection set; and

selecting a time-frequency resource from the first candidate resource set, wherein the time-frequency resource is used for physical sidelink control channel PSCCH transmission and/or physical sidelink shared channel PSSCH transmission, wherein

a resource in the first resource pool and a resource in the second resource pool at least partially overlap.

2. The method according to claim 1, wherein the determining a second resource set based on the first resource set and a received signal strength indicator RSSI of at least one resource in the first resource set comprises:
moving a resource with a smallest RSSI in the first resource set to the second resource set, until a ratio of a quantity of resources in the second resource set to a quantity of resources in the first resource pool is greater than or equal to a second threshold.

3. The method according to claim 1 or 2, wherein the determining a first candidate resource set comprises:
the first candidate resource set comprises the intersection set, and comprises at least one resource in a difference set of an intersection set of the first resource set and the third resource set relative to the second resource set.

4. The method according to claim 3, wherein that a resource is selected from the difference set of the intersection set of the first resource set and the third resource set relative to the second resource set comprises:
the first candidate resource set comprises the intersection set, and comprises one or more resources with smallest RSSIs in the difference set of the intersection set of the first resource set and the third resource set relative to the second resource set.

5. The method according to any one of claims 1 to 4, wherein the determining a first candidate resource set comprises:
the first candidate resource set comprises the intersection set, and comprises at least one resource in a difference set of the second resource set relative to the intersection set.

6. The method according to claim 5, wherein the determining a first candidate resource set comprises:
the first candidate resource set comprises the intersection set, and comprises one or more resources with smallest RSSIs in the difference set of the second resource set relative to the intersection set.

7. The method according to any one of claims 1 to 6, wherein a ratio of a quantity of resources in the first candidate resource set to the quantity of resources in the second resource pool is greater than or equal to a third threshold, wherein the third threshold is less than or equal to the first threshold.

8. The method according to any one of claims 1 to 7, wherein
that the first sidelink control information is used to determine the first resource set comprises:
excluding a first time-frequency resource from the resource pool when a reference signal received power RSRP measurement value of the first time-frequency resource is greater than a first RSRP threshold, wherein the first sidelink control information indicates a first priority and the first time-frequency resource, and the first priority is used to determine the first RSRP threshold.

9. The method according to claim 8, comprising:
excluding the first time-frequency resource from the resource pool, and excluding a resource that is not sensed from the resource pool, to obtain the first resource set.

10. The method according to any one of claims 1 to 9, wherein
that the second sidelink control information is used to determine the second resource set comprises:
excluding a second time-frequency resource from the resource pool when an RSRP measurement value of the second time-frequency resource is greater than a second RSRP threshold, wherein the second sidelink control information indicates a second priority and the second time-frequency resource, and the second priority is used to determine the second reference signal received power RSRP threshold.

11. The method according to claim 10, comprising:
excluding the second time-frequency resource from the resource pool, and excluding a resource that is not sensed from the resource pool, to obtain the third resource set.

12. The method according to claim 9 or 10, wherein the method further comprises:
increasing the first RSRP threshold, and redetermining the first resource set based on an increased first RSRP threshold to obtain a fourth resource set, wherein the first candidate resource set further comprises at least one resource in a difference set of the fourth resource set relative to the first resource set.

13. The method according to any one of claims 1 to 12, wherein
the first sidelink control information is information in an evolved universal terrestrial radio access E-UTRA technology, and the second sidelink control information is information in a new radio NR technology.

14. A resource selection apparatus, comprising:

a transceiver module, configured to receive first sidelink control information, wherein the first sidelink control information is used to determine a first resource set from a first resource pool; and
a processing module, configured to determine a second resource set from the first resource set based on a received signal strength indicator RSSI of each resource in the first resource set, wherein
the transceiver module is configured to receive second sidelink control information, wherein the second sidelink control information is used to determine a third resource set from a second resource pool;
the processing module is configured to determine a first candidate resource set, wherein when a ratio of a quantity of resources in an intersection set of the second resource set and the third resource set to a quantity of resources in the resource pool is less than a first threshold, the first candidate resource set comprises the intersection set, and the first candidate resource set further comprises at least one resource in a difference set of the first resource set relative to the intersection set; and
the processing module is configured to select a time-frequency resource from the first candidate resource set, wherein the time-frequency resource is used for physical sidelink control channel PSCCH transmission and/or physical sidelink shared channel PSSCH transmission, wherein
a resource in the first resource pool and a resource in the second resource pool at least partially overlap.

15. The apparatus according to claim 14, wherein
the processing module is configured to move a resource with a smallest RSSI in the first resource set to the second resource set, until a ratio of a quantity of resources in the second resource set to the quantity of resources in the second resource pool is greater than or equal to a second threshold.

16. The apparatus according to claim 14 or 15, wherein
the first candidate resource set comprises the intersection set, and comprises at least one resource in a difference set of an intersection set of the first resource set and the third resource set relative to the second resource set.

17. The apparatus according to claim 16, wherein the first candidate resource set comprises the intersection set, and comprises one or more resources with smallest RSSIs in the difference set of the intersection set of the first resource set and the third resource set relative to the second resource set.

18. The apparatus according to any one of claims 14 to 17, wherein
the first candidate resource set comprises the intersection set, and comprises at least one resource in a difference set of the second resource set relative to the intersection set.

19. The apparatus according to claim 18, wherein
the first candidate resource set comprises the intersection set, and comprises one or more resources with smallest RSSIs in the difference set of the second resource set relative to the intersection set.

20. The apparatus according to any one of claims 14 to 19, wherein a ratio of a quantity of resources in the first candidate resource set to the quantity of resources in the second resource pool is greater than or equal to a third threshold, wherein the third threshold is less than or equal to the first threshold.

21. The apparatus according to any one of claims 14 to 20, wherein
that the first sidelink control information is used to determine the first resource set comprises:
the processing module is configured to exclude a first time-frequency resource from the first resource pool when a reference signal received power RSRP of the first time-frequency resource is greater than a first RSRP threshold, wherein the first sidelink control information indicates a first priority and the first time-frequency resource, and the first priority is used to determine the first RSRP threshold.

22. The apparatus according to claim 21, wherein
the processing module is configured to: exclude the first time-frequency resource from the resource pool, and exclude a resource that is not sensed from the first resource pool, to obtain the first resource set.

23. The apparatus according to any one of claims 14 to 22, wherein
that the second sidelink control information is used to determine the second resource set comprises:
the processing module is configured to exclude a second time-frequency resource from the second resource pool when an RSRP of the second time-frequency resource is greater than a second RSRP threshold, wherein the second sidelink control information indicates a second priority and the second time-frequency resource, and the second priority is used to determine the second reference signal received power RSRP threshold.

24. The apparatus according to claim 23, wherein
the processing module is configured to: exclude the second time-frequency resource from the second resource pool, and exclude a resource that is not sensed from the resource pool, to obtain the third resource set.

25. The apparatus according to claim 20, wherein
the processing module is further configured to: increase the first RSRP threshold, and redetermine the first resource set based on an increased first RSRP threshold to obtain a fourth resource set, wherein the first candidate resource set further comprises a resource in a difference set of the fourth resource set relative to the first resource set.

26. The method according to any one of claims 14 to 25, wherein
the first sidelink control information is information in an evolved universal terrestrial radio access E-UTRA technology, and the second sidelink control information is information in a new radio NR technology.

27. A communication apparatus, comprising a processor, wherein the processor is configured to execute a program or instructions stored in a memory, to implement the method according to any one of claims 1 to 13.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 through a logic circuit or by executing code instructions.

29. A computer-readable storage medium, wherein the storage medium stores a program or instructions; and when the program or the instructions are run on a computer, the method according to any one of claims 1 to 13 is implemented.

30. A computer program product, wherein the computer product comprises a program or instructions; and when the program or the instructions are run on a computer, the method according to any one of claims 1 to 13 is implemented.

FIG. 1

FIG. 2

Power spectral density

Time

LTE V2X

NR V2X

t2

LTE V2X

NR V2X

t1

LTE V2X

NR V2X

Band B

Band A

Frequency

FIG. 3(a)

FIG. 3(b)

Trigger resource selection

Resource sensing window

Time-frequency resource 1

Time-frequency resource 3

Resource selection window

Time-frequency resource 2

Time-frequency resource 4

Time-frequency resource 5

$n-T_0$        $n-T_{proc,0}^{SL}$   n   $n+T_1$        $n+T_2$

FIG. 4(a)

**Trigger resource selection**

*200 ms*

**Resource sensing window**

Time-frequency resource 1

**Resource selection window**

Time-frequency resource 2   *50 ms*

Time-frequency resource 3   *50 ms*

Time-frequency resource 4

$t_1$        $n_1$   $n_1+T_1$        $t_2$        $n_1+T_2$        $t$

FIG. 4(b)

FIG. 5

First communication module 601

Second communication module 602

FIG. 6

FIG. 7(a)

FIG. 7(b)

| First terminal device | Second terminal device | Third terminal device | Fourth terminal device |
|---|---|---|---|

801: First sidelink control information

802: Determine a first resource set and a second resource set

803: Second sidelink control information

803: Determine a third resource set

804: Determine a first candidate resource set

805: PSCCH transmission or PSSCH transmission

**FIG. 8**

| First terminal device | Second terminal device | Third terminal device | Fourth terminal device |
|---|---|---|---|

901: First sidelink control information

902: Determine a first resource set

903: Second sidelink control information

903: Determine a third resource set

904: Determine a first candidate resource set

905: PSCCH transmission or PSSCH transmission

**FIG. 9**

| First terminal device | Second terminal device | Third terminal device | Fourth terminal device |
|---|---|---|---|

1001: First sidelink control information

1002: Determine a first resource set and a second resource set

1003: Second sidelink control information

1003: Determine a third resource set

1004: When a ratio of a quantity of resources in an intersection set of the second resource set and the third resource set to a quantity of resources in a resource pool is less than a first threshold, increase a second RSRP threshold to determine a fifth resource set

1005: PSCCH transmission or PSSCH transmission

FIG. 10

| First terminal device | Second terminal device | Third terminal device | Fourth terminal device |
|---|---|---|---|

1101: First sidelink control information

1102: Second sidelink control information

1103: Determine a first candidate resource set

1104: PSCCH transmission or PSSCH transmission

FIG. 11

FIG. 12

Communication apparatus — 1300

Interface module — 1301

Processing module — 1302

FIG. 13

400

Processor — 401

CPU 0

CPU 1

Memory — 403

Communication line 402

Communication interface — 404

Output device — 405

Input device — 406

FIG. 14

## INTERNATIONAL SEARCH REPORT

| International application No. |
|---|
| **PCT/CN2023/127187** |

| A. | CLASSIFICATION OF SUBJECT MATTER |
|---|---|

H04W72/25(2023.01)i

According to International Patent Classification (IPC) or to both national classification and IPC

| B. | FIELDS SEARCHED |
|---|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP, CNKI, IEEE: 资源, 选择, 配置, 侧行, 侧链路, 旁链路, 侧行控制信息, 侧链路控制信息, 资源集, 接收信号强度, 阈值, 物理侧行控制信道, 物理侧行共享信道, 无线接入技术, 不同, 多, 共享, 共存, resource, select+, choos+, configur+, sidelink, SL, SCI, resource set?, RSSI, threshold, PSCCH, PSSCH, RAT, differ+, multi+, share, coexist

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115024004 A (BEIJING XIAOMI MOBILE SOFTWARE CO., LTD.) 06 September 2022 (2022-09-06) description, paragraphs [0139]-[0179] | 1-30 |
| A | CN 114125939 A (HUAWEI TECHNOLOGIES CO., LTD.) 01 March 2022 (2022-03-01) entire document | 1-30 |
| A | CN 114642058 A (OPPO GUANGDONG MOBILE COMMUNICATION CO., LTD.) 17 June 2022 (2022-06-17) entire document | 1-30 |
| A | WO 2022077472 A1 (HUAWEI TECHNOLOGIES CO., LTD.) 21 April 2022 (2022-04-21) entire document | 1-30 |
| A | WO 2022077877 A1 (HUAWEI TECHNOLOGIES CO., LTD.) 21 April 2022 (2022-04-21) entire document | 1-30 |
| A | US 2021127364 A1 (INTEL CORP.) 29 April 2021 (2021-04-29) entire document | 1-30 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/127187**

### C. DOCUMENTS CONSIDERED TO BE RELEVANT

| Category* | Citation of document, with indication, where appropriate, of the relevant passages | Relevant to claim No. |
|---|---|---|
| A | QUALCOMM INCORPORATED. "Co-Channel Coexistence between LTE SL and NR SL" *3GPP TSG RAN WG1 Meeting #109-e R1- 2205035*, 29 April 2022 (2022-04-29), sections 2-5 | 1-30 |
| A | FRAUNHOFER HHI. "FL Summary for AI 9.4.2 - Co-Channel Coexistence for LTE and NR Sidelink" *3GPP TSG RAN WG1 Meeting #109-e R1- 2205588*, 24 May 2022 (2022-05-24), sections 2-5 | 1-30 |

Form PCT/ISA/210 (second sheet) (July 2022)

**INTERNATIONAL SEARCH REPORT**
Information on patent family members

International application No.

**PCT/CN2023/127187**

| Patent document cited in search report | | | Publication date (day/month/year) | Patent family member(s) | | | Publication date (day/month/year) |
|---|---|---|---|---|---|---|---|
| CN | 115024004 | A | 06 September 2022 | None | | | |
| CN | 114125939 | A | 01 March 2022 | WO | 2022042489 | A1 | 03 March 2022 |
| CN | 114642058 | A | 17 June 2022 | EP | 4075897 | A1 | 19 October 2022 |
| | | | | EP | 4075897 | A4 | 24 May 2023 |
| | | | | WO | 2021258511 | A1 | 30 December 2021 |
| | | | | JP | 2023531112 | A | 21 July 2023 |
| | | | | US | 2022350659 | A1 | 03 November 2022 |
| WO | 2022077472 | A1 | 21 April 2022 | None | | | |
| WO | 2022077877 | A1 | 21 April 2022 | EP | 4207894 | A1 | 05 July 2023 |
| | | | | CN | 116420360 | A | 11 July 2023 |
| US | 2021127364 | A1 | 29 April 2021 | WO | 2020092939 | A1 | 07 May 2020 |
| | | | | US | 11570757 | B2 | 31 January 2023 |

Form PCT/ISA/210 (patent family annex) (July 2022)